# EUROPEAN PATENT SPECIFICATION

(11) **EP 2 980 432 B1**
(45) Date of publication and mention of the grant of the patent: **25.09.2019**
(21) Application number: 14775738.9
(22) Date of filing: 27.03.2014
(51) Int. Cl.: F16C 33/76, B60B 35/02, F16C 19/18, F16C 33/58, F16C 41/00, F16J 15/10, G01P 3/487, F16C 33/78, F16C 33/72

(54) **WHEEL BEARING DEVICE**
RADLAGERVORRICHTUNG
DISPOSITIF DE ROULEMENT DE ROUE

(30) Priority: 27.03.2013 JP 2013067578; 03.04.2013 JP 2013077865
(43) Date of publication of application: 03.02.2016
(73) Proprietor: NTN Corporation, Osaka-shi, Osaka 550-0003 (JP)
(72) Inventor: WAKATSUKI, Atsushi, Iwata-shi Shizuoka 438-8510 (JP)
(74) Representative: Cohausz & Florack
(86) International application number: PCT/JP2014/058905
(87) International publication number: WO 2014/157537

(56) References cited:
- WO-A1-2009/084355
- JP-A- H04 175 580
- JP-A- 2004 052 831
- JP-A- 2005 249 180
- JP-A- 2005 249 180
- JP-A- 2007 309 389
- JP-A- 2008 196 553
- JP-A- 2008 196 553
- JP-A- 2010 125 866
- JP-A- 2010 125 866
- JP-A- 2013 028 248
- JP-A- 2013 028 248
- US-A1- 2011 181 101

## Description

### Field of the Invention

The present invention generally relates to a wheel bearing apparatus for rotationally support a wheel of a vehicle such as an automobile with respect to a suspension apparatus, and more particularly to a wheel bearing apparatus to which a rotational speed sensor for detecting rotation speed of a wheel of vehicle is adapted to be mounted.

### Description of Background Art

It has been generally known a wheel bearing apparatus which can support a wheel of vehicle with respect to a suspension apparatus and detect a rotation speed of a wheel of vehicle to control the anti-lock braking system (ABS). Such a bearing apparatus generally comprises a sealing apparatus arranged between inner and outer members rotating relatively each other via rolling elements contained therebetween. The rotational speed detecting apparatus comprises a magnetic encoder having magnetic poles alternately arranged along its circumference integrally formed with the sealing apparatus and a rotational speed sensor for detecting change of magnetic poles of the magnetic encoder caused by the rotation of a wheel.

In general, the rotational speed sensor is mounted on a knuckle after the wheel bearing apparatus has been mounted on the knuckle forming part of a suspension apparatus. However, it has been recently proposed a wheel bearing apparatus to which a rotational speed sensor is adapted to be mounted in order to reduce a whole size of the wheel bearing apparatus and to eliminate the complexity of adjustment of an air gap between the rotational speed sensor and a magnetic encoder.

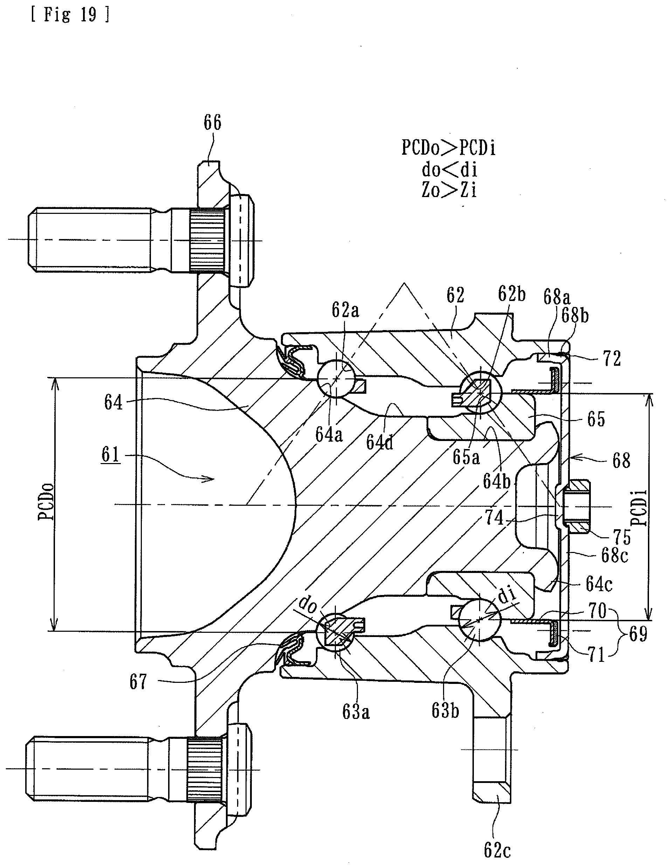

It is known a structure shown in Fig. 19 as one example of the wheel bearing apparatus. This wheel bearing apparatus comprises an inner member 61, an outer member 62 and double row balls 63a, 63b rollably contained between the inner and outer members 61, 62. The inner member 61 comprises a hub wheel 64 and an inner ring 65 press-fitted onto the hub wheel 64 via a predetermined interference.

The hub wheel 64 has a wheel mounting flange 66 on its one end, one inner raceway surface 64a formed on the outer circumference of the hub wheel 64 and a cylindrical portion 64b axially extending from the inner raceway surface 64a via a shaft portion 64d.

The inner ring 65 is formed on its outer circumference with the other inner raceway surface 65a, press-fitted onto the cylindrical portion 64b of the hub wheel 64 and axially immovably secured by a caulked portion 64c formed by plastically deforming the end of the cylindrical portion 64b.

The outer member 62 is formed on its outer circumference with a body mounting flange 62c and on its inner circumference with an outer raceway surface 62a opposing to the inner raceway surface 64a of the hub wheel 64 and outer raceway surface 62b opposing to the inner raceway surface 65a of the inner ring 65. In addition, a seal 67 and a sensor cap 68 are mounted in annular openings formed between the inner and outer members 61, 62 to prevent leakage of lubricating grease sealed within the bearing and entering of rain water or dust from the outside into the bearing.

The pitch circle diameter PCDo of the balls 63a of the outboard-side row is set larger than the pitch circle diameter PCDi of the balls 63b of the inboard-side row (PCDo > PCDi) and the ball diameter do of the balls 63a of the outboard-side is set smaller than the ball diameter di of the balls 63b of the inboard-side (do < di). In addition, the number Zo of the balls 63a of the outboard-side is set larger than the number Zi of the balls 63b of the inboard-side (Zo > Zi). This makes it possible to increase the bearing rigidity of the outboard-side as compared with that of the inboard-side and thus to increase the bearing life.

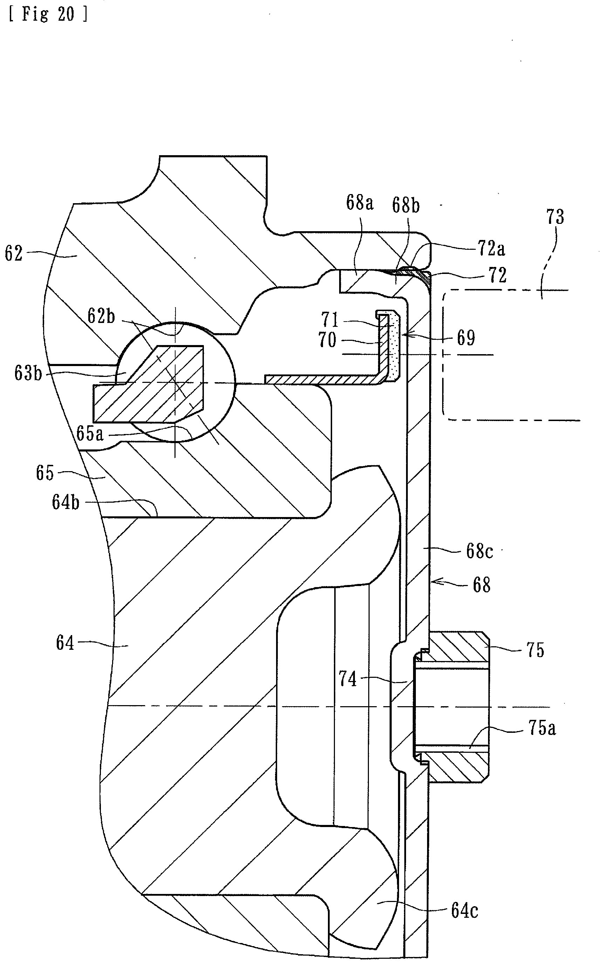

As shown in Fig. 20, a pulser ring 69 is press-fitted onto the inner ring 65. The pulser ring 69 comprises a support annulus 70 and a magnetic encoder 71 adhered to one side of the support annulus 70 via vulcanized adhesion.

The sensor cap 68 is secured by press-fitting into the inboard-side end of the outer member 62 to close the opening thereof. The sensor cap 68 is press-formed of austenitic stainless steel sheet as having a cup configuration and comprises a cylindrical fitting portion 68a to be press-fitted into the inner circumference of the inboard-side end of the outer member 62 and a bottom portion 68c extending radially inward from the fitting portion 68a via a radially reduced portion 68b to cover the end opening of the inner member 61.

An elastic member 72 of synthetic rubber such as NBR (acrylonitric butadiene rubber) is integrally adhered to the outer circumference of the radially reduced portion 68b of the sensor cap 68. The elastic member 72 is adhered to the sensor cap 68 so that it does not project toward the inboard- side from the side of the bottom portion 68c to prevent the elastic member 72 from interfering a rotational speed sensor 73. In addition, the elastic member 72 has an annular projection 72a projecting radially outward beyond the fitting portion 68a of the outer member 62 so that it is elastically deformed and press-contacted against the inner circumference of the outer member 62 during the press-fitting of the sensor cap 68 to improve the sealability of the fitting portion 68a.

A circular recess 74 is formed substantially at the center of the bottom portion 68c of the sensor cap 68 and a nut 75 is crimped therein. The rotational speed sensor 73 can be secured on the sensor cap 68 by fastening a securing bolt (not shown) to a female thread 75a via a mounting flange (not shown) of the rotational speed sensor 73. This enables to smoothly secure the rotational speed sensor 73 without causing deviated torque on the sensor cap 68 during fastening of the securing bolt.

The rotational speed sensor 73 is arranged at radially outer position of the bottom portion 68c of the sensor cap 68 oppositely to the magnetic encoder 71 with being abutted against or closely approached thereto to detect wheel rotational speed by detecting variation of magnetic flux of the magnetic encoder 71 via the bottom portion 68c of the sensor cap 68. This makes it possible to obtain a desirable air gap and thus to improve workability of assembly of the wheel bearing with omitting complex air gap adjustment. Additionally, since the magnetic encoder is closed by the sensor cap 68, it is possible to provide a wheel bearing apparatus integrated with a rotational speed detecting apparatus which can obtain sealability without adversely affecting the detecting performance (see e.g. Patent Document 1 below). JP 2013 028248 A shows a wheel bearing apparatus according to the preamble of claim 1 and JP 2010 125866 A shows a wheel bearing apparatus according to the preamble of claim 4.

### Document of Prior Art

### Patent Document

Patent Document 1: JP 2011-196425 A

### Disclosure of the Invention

### Problems to be solved by the Invention

In such a wheel bearing apparatus of the prior art, since the sensor cap 68 is integrally formed with the elastic member 72 and this elastic member 72 is formed with the annular projection 72a projecting radially outward beyond the outer circumference of the fitting portion 68a of the sensor cap 68, it has an advantage that the annular projection can be elastically deformed and press-contacted against the inner circumference of the outer member 62 during fitting of the sensor cap 68 and thus improve the sealability of the fitting portion of the sensor cap 68.

However, the wheel bearing apparatus of the prior art has a disadvantage that the fitting surface of the outer member 62 would be caused small linear scratches by the fitting portion 68a of the sensor cap 68 during fitting of the sensor cap 68 and accordingly the annular projection 72a of the elastic member 72 would be partially damaged and thus the sealability of the fitting portion 68a of the sensor cap 68 would be also impaired.

It is, therefore, an object of the present invention to provide a wheel bearing apparatus which does not cause any damage on the elastic member even if any linear scratch would be caused on the fitting surface of the outer member by the cap during fitting thereof and thus improve the sealability of the fitting portion and the reliability of the wheel bearing apparatus.

### Means for solving problems

For achieving the object mentioned above, there is provided, according to the present invention, a wheel bearing apparatus as defined in claim 1.

According to the present invention, since it comprises a seal mounted in an outboard-side opening of annular openings formed between the outer member and the inner member; and a first cap press-fitted into an inboard-side opening of the outer member, the first cap comprising a cylindrical fitting portion press-fitted into an inside fitting surface of the outer member and a bottom portion extending radially inward from the fitting portion to cover the inboard-side end of the inner member, and the first cap being integrally adhered on its inboard-side outer circumference of the fitting portion with an elastic member of synthetic rubber via vulcanized adhesion and the elastic member projecting radially outward beyond the outer diameter of the fitting portion and is characterized in that the inner circumference of the inboard-side end of the outer member is formed by an inside fitting surface into which the first cap is press-fitted and a retracted surface formed inboard-side from the inside fitting surface via a step portion and having a larger diameter than that of the inside fitting surface, and that the elastic member is press-contacted against the retracted surface with being elastically deformed, no scratch due to press-fitting would be caused on the retracted surface where the elastic member contacts even if any linear scratch would be caused on the fitting surface of the outer member by the first cap (i.e. sealing cap) during fitting thereof and also damage to the elastic member is prevented. Accordingly, it is possible to improve the sealability of the fitting portion of the first cap and the reliability of the wheel bearing apparatus.

According to the present invention, since the inner diameter of the retracted surface is set larger than the maximum value of the tolerance of the inner diameter of the inside fitting surface, it is surely possible to prevent scratches from being caused during fitting of the first cap (sealing cap) on the retracted surface against which the elastic member is press-contacted.

According to the present invention, since the retracted surface of the outer member is formed as a tapered surface gradually extending toward the open end and the elastic member has a tapered surface press-contacted against the retracted surface, the elastic member can be firmly pressed against the tapered surface of the outer member via wedge effect between the tapered surfaces of the elastic member and the retracted surface of the outer member and thus it is possible to further improve the sealability of the fitting portion.

Further disclosed is that, since the elastic member is press-contacted against both the step portion and retracted surface of the outer member, the elastic member can fill the fitting clearance between the outer member and the first cap (sealing cap) and thus improve the sealability of the fitting portion.

According to the present invention, since a pulser ring having circumferentially and equidistantly varying magnetic characteristics is press-fitted onto the inner ring, the first cap is formed of non-magnetic steel sheet, and a rotational speed sensor is opposed to the pulser ring via a predetermined axial air gap through the first cap with the rotational speed sensor being abutted against or arranged close to the first cap, it is possible to set the air gap small without adversely affecting the detecting performance of the rotational speed sensor to improve the detecting accuracy and sealability of bearing spaces.

According to the present invention, there is also provided a wheel bearing apparatus as defined in claim 4.

According to the present invention, since it comprises a first cap (sealing cap) press-fitted into an inboard-side opening of the outer member, an elastic member of synthetic rubber being integrally adhered on the outer circumference of the first cap via vulcanized adhesion, and a pulser ring press-fitted onto the outer circumference of the inner ring and is characterized in that the elastic member is press-contacted against the outer member with being elastically deformed; and that the elastic member and the pulser ring are arranged at positions axially spaced apart each other, it is possible to prevent the first cap and the pulser ring from being interfered each other and thus to improve the detecting accuracy and reliability with increasing the degree of freedom of design.

According to the present invention, since the fitting portion of the cap is press-fitted into the inboard-side inner circumference of the outer member so that the tip end of the fitting portion is directed to the outboard side, a radially reduced portion is further extended from the tip end of the fitting portion via an inclined portion, and the elastic member adhered to the cap so that the elastic member covers the outer circumference of the inclined portion and the radially reduced portion and extends around the tip end of the radially reduced portion, it is possible to prevent the cap and the pulser ring from being interfered each other and thus to eliminate necessity for increasing the outer diameter of the first cap or reducing the outer diameter of the pulser ring for avoiding the interference of them. Accordingly, the degree of freedom of design can be increased. In addition, it is possible to prevent reduction of detecting accuracy even if adopting the magnetic encoder as a pulser ring due to separation of the radially reduced portion of the first cap and the pulser ring spaced away each other.

Further disclosed is that, since the fitting portion of the cap is press-fitted into the inboard-side inner circumference of the outer member so that the tip end of the fitting portion is directed to the outboard side, a radially reduced portion is further extended from the tip end of the fitting portion via a bent portion bent perpendicularly to the fitting portion, and the elastic member adhered to the cap so that the elastic member covers the outer circumference of the bent portion and the radially reduced portion and extends around the tip end of the radially reduced portion, it is possible to increase the strength and rigidity of the first cap itself and reduce its axial dimension.

According to the present invention, since the inboard-side inner circumference of the outer member comprises an inside fitting surface into which the first cap (i.e. sealing cap) is press-fitted and a cylindrical surface of a smaller diameter than the inside fitting surface extending from the inside fitting surface via a step portion, the elastic member is formed with an annular projection projected radially outward, and the step portion of the outer member is formed as having a tapered surface against which the annular projection of the elastic member is press-contacted with being elastically deformed, the elastic member can be firmly pressed against the step portion of the outer member via wedge effect and thus it is possible to further improve the sealability of the fitting portion.

According to the present invention, since the elastic member is press-contacted against the inside fitting surface and the step portion of the outer member so that it fills an annular space formed by the inside fitting surface and the step portion, it is possible to further increase the degree of close contact of the elastic member and accordingly the sealability of the fitting portion.

Further disclosed is that, since the step portion of the outer member vertically extends radially inward and the elastic member is press-contacted against the step portion with being elastically deformed, the elastic member is abutted against the vertical step portion not against the inner cylindrical circumference of the outer member. Accordingly, it is possible to prevent the elastic member from being damaged during fitting of the first cap and thus to improve the reliability of the wheel bearing apparatus.

Further disclosed is that, since the fitting portion of the cap is press-fitted into the inboard-side inner circumference of the outer member so that the tip end of the fitting portion is directed to the inboard side, and the elastic member is adhered to the outer circumference of the inclined portion of the cap facing to the press-fitting direction, the side of the pulser ring and the fitting portion of the first cap are not positioned on a same plane even if the inclined portion and the pulser ring are arranged at axially near positions each other. Thus, it is possible to prevent the cap and the pulser ring from being interfered each other and thus to eliminate necessity for increasing the outer diameter of the first cap or reducing the outer diameter of the pulser ring for avoiding the interference of them. Accordingly, the degree of freedom of design can be increased. In addition, it is possible to prevent reduction of detecting accuracy even if adopting the magnetic encoder as a pulser ring due to separation of the radially reduced portion of the first cap and the pulser ring spaced away each other.

According to the present invention, since the maximum value of the tolerance of the inner diameter of the inside fitting retracted surface is set larger than the inner diameter of the surface of the smaller diameter, no scratch will be caused on the surface of smaller diameter of the outer member by the fitting portion of the first cap during fitting thereof and also the elastic member will not be damaged.

According to the present invention, since the second cap is arranged on the inboard-side of the first cap, the second cap comprises a fitting portion to be press-fitted into the end of the outer member, a flange portion to be closely contacted to an inboard-side end of the outer member and a bottom portion for closing the inboard-side opening of the outer member, an aperture is formed on the bottom portion at a horizontal position corresponding to the pulser ring, and a rotational speed sensor is mounted in the aperture, it is possible to improve the positioning accuracy of the rotational speed sensor with increasing rigidity of the second cap (sensor cap) and to suppress variation of air gap between the rotational speed sensor and the pulser ring even if the outer member and the inner member would be relatively inclined by lateral load imparted from wheels.

According to the present invention, since the second cap (sensor cap) is coated by preserving coating film comprising cation electro-deposition, it is possible to prevent generation of corrosion on the fitting portion of the sensor cap for a long term and thus to obtain excellent sealability between the second cap and the fitting portion of the outer member.

### Effects of the invention

According to the wheel bearing apparatus of the first embodiment of the present invention, since it comprises an outer member integrally formed on its outer circumference with a body mounting flange to be mounted on a body of a vehicle and on its inner circumference with double row outer raceway surfaces; an inner member including a hub wheel and at least one inner ring, the hub wheel integrally formed on its one end with a wheel mounting flange and having a cylindrical portion axially extending from the wheel mounting flange, the inner ring being press-fitted onto the cylindrical portion of the hub wheel, the inner member being formed on its outer circumference with double row inner raceway surfaces opposing to the double row outer raceway surfaces; double row rolling elements contained between the outer raceway surfaces and inner raceway surfaces respectively of the outer member and the inner member; a seal mounted in an outboard-side opening of annular openings formed between the outer member and the inner member; and a first cap press-fitted into an inboard-side opening of the outer member, the first cap comprising a cylindrical fitting portion press-fitted into an inside fitting surface of the outer member and a bottom portion extending radially inward from the fitting portion to cover the inboard-side end of the inner member, and the first cap being integrally adhered on its inboard-side outer circumference of the fitting portion with an elastic member of synthetic rubber via vulcanized adhesion and the elastic member projecting radially outward beyond the outer diameter of the fitting portion and is characterized in that the inner circumference of the inboard-side end of the outer member is formed by an inside fitting surface into which the first cap is press-fitted and a retracted surface formed inboard-side from the inside fitting surface via a step portion and having a larger diameter than that of the inside fitting surface, and that the elastic member is press-contacted against the retracted surface with being elastically deformed, no scratch due to press-fitting would be caused on the retracted surface where the elastic member contacts even if any linear scratch would be caused on the fitting surface of the outer member by the first cap (i.e. sealing cap) during fitting thereof and also damage to the elastic member is prevented and accordingly it is possible to improve the sealability of the fitting portion of the first cap and the reliability of the wheel bearing apparatus.

According to the wheel bearing apparatus of the second embodiment of the present invention, since it comprises an outer member integrally formed on its outer circumference with a body mounting flange to be mounted on a body of a vehicle and on its inner circumference with double row outer raceway surfaces; an inner member including a hub wheel and at least one inner ring, the hub wheel integrally formed on its one end with a wheel mounting flange and having a cylindrical portion axially extending from the wheel mounting flange, the inner ring being press-fitted onto the cylindrical portion of the hub wheel, the inner member being formed on its outer circumference with double row inner raceway surfaces opposing to the double row outer raceway surfaces; double row rolling elements contained between the outer raceway surfaces and inner raceway surfaces respectively of the outer member and the inner member; a seal mounted in an outboard-side opening of annular openings formed between the outer member and the inner member; a first cap press-fitted into an inboard-side opening of the outer member, an elastic member of synthetic rubber being integrally adhered on the outer circumference of the first cap via vulcanized adhesion, and a pulser ring press-fitted onto the outer circumference of the inner ring and is characterized in that the elastic member is press-contacted against the outer member with being elastically deformed; and that the elastic member and the pulser ring are arranged at positions axially spaced apart each other, it is possible to prevent the first cap and the pulser ring from being interfered each other and thus to improve the detecting accuracy and reliability with increasing the degree of freedom of design.

### Brief Description of the Drawings

[Fig.1] A longitudinal-section view of a first example of a wheel bearing apparatus not forming part of the present invention;
[Fig. 2] A partially enlarged view of a detecting portion of Fig. 1;
[Fig.3] A partially enlarged view of a drain portion of Fig. 1;
[Fig.4] A partially enlarged view of a fitting portion of a first cap of Fig. 1;
[Fig.5] A partially enlarged view of one modification of the wheel bearing apparatus of Fig. 1;
[Fig.6] A partially enlarged view of a first embodiment of the present invention showing one modification of the fitting portion of the first cap of Fig. 1;
[Fig.7] A partially enlarged view of another modification of the fitting portion of the first cap of Fig. 1;
[Fig.8] A partially enlarged view of a further modification of the fitting portion of the first cap of Fig. 1;
[Fig.9] A longitudinal-section view of a second embodiment of a wheel bearing apparatus of the present invention;
[Fig.10] A partially enlarged view of a detecting portion of Fig. 9;
[Fig.11] A partially enlarged view of a fitting portion of the first cap of Fig. 9;
[Fig.12] A partially enlarged view of one modification of the fitting portion of the first cap of Fig. 11;
[Fig.13] A partially enlarged view of another modification of the fitting portion of the first cap of Fig. 11;
[Fig.14] A partially enlarged view of one modification of the first cap of Fig. 11;
[Fig. 15] A partially enlarged view of one modification of the first cap of Fig. 13;
[Fig. 16] A partially enlarged view of one modification of the fitting portion of the first cap of Fig. 14;
[Fig. 17] A partially enlarged view of a third example of a wheel bearing apparatus not forming part of the present invention;
[Fig.18] A partially enlarged view of a fitting portion of the first cap of Fig. 17;
[Fig. 19] A longitudinal-section view of a wheel bearing apparatus of the prior art; and
[Fig. 20] A partially enlarged view of a fitting portion of a second cap of Fig. 19.

### One preferable mode for carrying out the Invention

One preferable mode for carrying out the present invention is a wheel bearing apparatus comprising an outer member integrally formed on its outer circumference with a body mounting flange to be mounted on a body of a vehicle and on its inner circumference with double row outer raceway surfaces; an inner member including a hub wheel and at least one inner ring, the hub wheel integrally formed on its one end with a wheel mounting flange and having a cylindrical portion axially extending from the wheel mounting flange and one inner raceway surface opposing to one of the outer raceway surfaces, the inner ring being formed on its outer circumference with the other inner raceway surface opposing to the other one of the double row outer raceway surfaces and press-fitted onto the cylindrical portion of the hub wheel; double row rolling elements contained between the outer raceway surfaces and inner raceway surfaces respectively of the outer member and the inner member; a seal mounted in an outboard-side opening of annular openings formed between the outer member and the inner member; a magnetic encoder mounted on the inner ring; a cup-shaped first cap (sealing cap) press-fitted into the inboard-side end of the outer member, and a cup-shaped second cap (sensor cap) mounted on the inboard-side of the outer member and having a rotational speed sensor mounted on the second cap at its radially outer position, the rotational speed sensor and the magnetic encoder being opposed to each other via a predetermined axial air gap characterized in that the first cap is press-formed of non-magnetic steel sheet and comprises a cylindrical fitting portion press-fitted into an inside fitting surface of the outer member, and a disc portion extending radially inward from the fitting portion and opposed to the magnetic encoder via a small axial clearance, the rotational speed sensor being abutted against or closely approached to the disc portion and opposed to the magnetic encoder via the first cap, that the inner circumference of the inboard-side end of the outer member is formed by an inside fitting surface into which the first cap is press-fitted and a retracted surface formed inboard-side from the inside fitting surface via a step portion and having a larger diameter than that of the inside fitting surface, that an elastic member formed of synthetic rubber is integrally adhered to the outer circumference of the inboard-side end of the fitting portion and that the elastic member is press-contacted against the retracted surface with being elastically deformed.

Preferred embodiments of the present invention and further disclosures will be described with reference to the accompanied drawings.

### Examples and First Embodiment

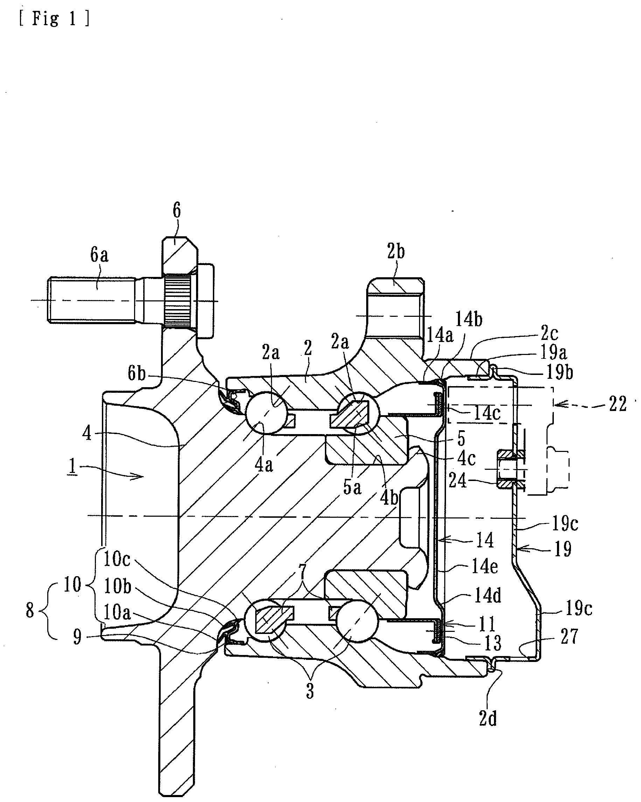

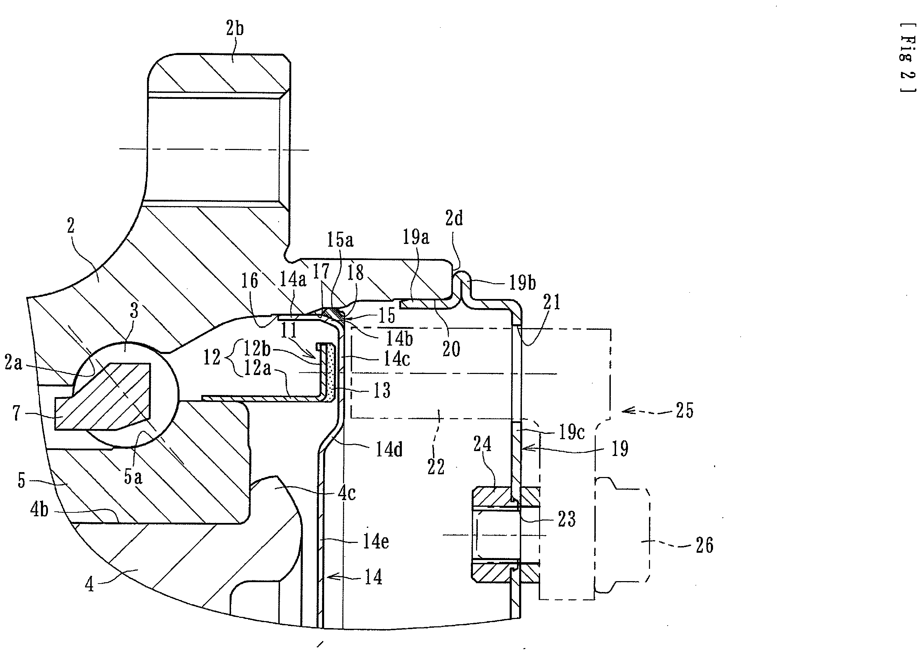

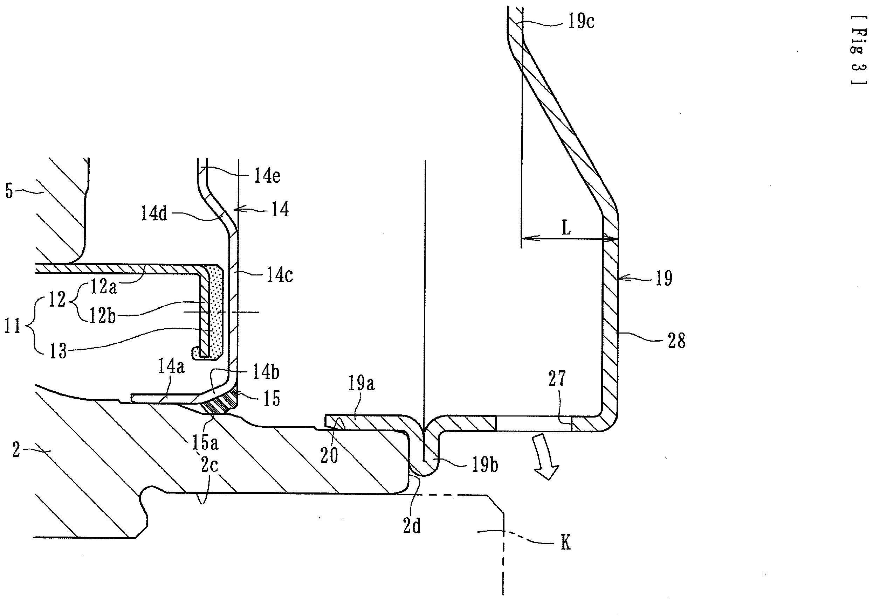

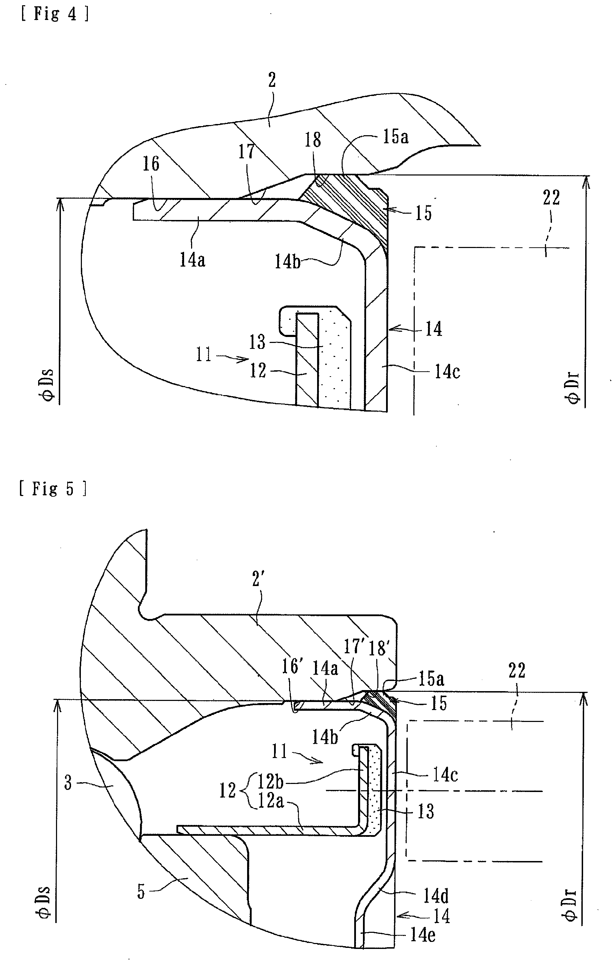

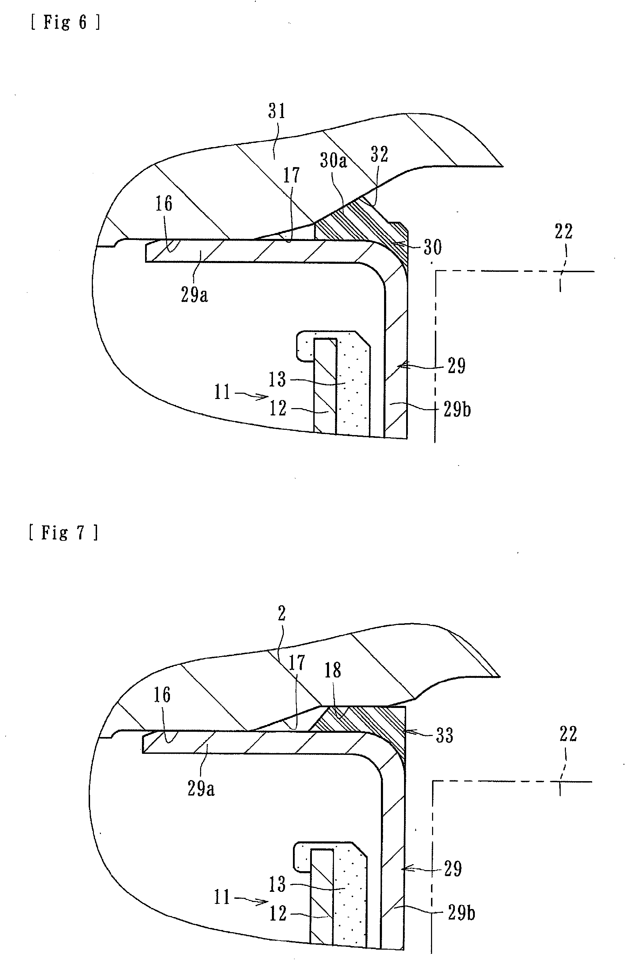

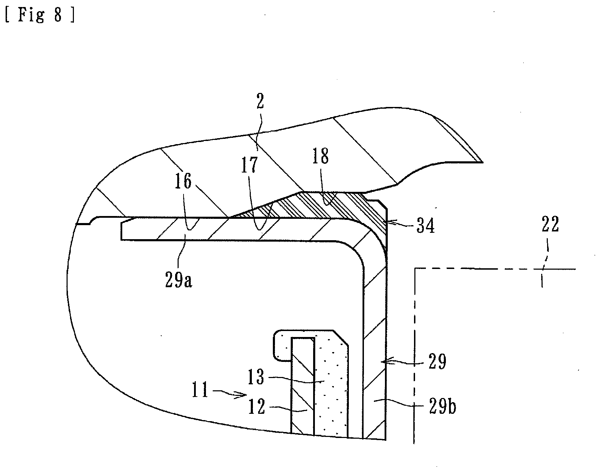

Fig.1 is a longitudinal-section view of a first example of a wheel bearing apparatus not forming part of the present invention, Fig. 2 is a partially enlarged view of a detecting portion of Fig. 1, Fig.3 is a partially enlarged view of a drain portion of Fig. 1, Fig.4 is a partially enlarged view of a first embodiment of the present invention showing a fitting portion of a first cap of Fig. 1, Fig.5 is a partially enlarged view of one modification of the wheel bearing apparatus of Fig. 1, Fig.6 is a partially enlarged view of one modification of the fitting portion of the first cap of Fig. 1, Fig.7 is a partially enlarged view of another modification of the fitting portion of the first cap of Fig. 1, and Fig.8 is a partially enlarged view of a further modification of the fitting portion of the first cap of Fig. 1. In the description below, an outer-side of the wheel bearing apparatus when it is mounted on a vehicle is referred to as "outboard-side" (a left-side in drawings) and an inner-side of the wheel bearing apparatus when it is mounted on a vehicle is referred to as "inboard-side" (a right-side in drawings).

The wheel bearing apparatus of Fig. 1 is a so-called "third generation" type for a driven wheel and comprises an inner member 1, an outer member 2, and double row rolling elements (balls) 3, 3 contained between the inner and outer members 1 and 2. The inner member 1 includes the hub wheel 4 and an inner ring 5 press-fitted onto the hub wheel 4 via a predetermined interference.

The hub wheel 4 is integrally formed, on its outboard-side end, with a wheel mounting flange 6 for mounting a wheel (not shown) and formed, on its outer circumference, with one (i.e. outboard-side) inner raceway surface 4a from which a cylindrical portion 4b axially extends. Hub bolts 6a are secured on the wheel mounting flange 6 at its circumferentially equidistant positions.

The inner ring 5 is formed, on its outer circumference, with the other (i.e. inboard-side) inner raceway surface 5a and press-fitted onto the cylindrical portion 4b of the hub wheel 4 to form a double row angular contact ball bearing of back-to-back duplex type and axially secured on the hub wheel 4 by a caulked portion 4c formed by plastically deforming the end of the cylindrical portion 4b. This enables to reduce both weight and size of the wheel bearing apparatus. The inner ring 5 and balls 3, 3 are formed of high carbon chrome steel such as SUJ2 and dipping hardened to their cores as having hardness of 58∼64 HRC.

The hub wheel 4 is made of medium-high carbon steel such as S53C including carbon of 0.40∼0.80% by weight and is hardened by high frequency induction hardening as having a surface hardness of 58∼64 HRC over a region from an inboard-side base 6b of the wheel mounting flange 6 forming a seal land portion later described to the cylindrical portion 4b including the inner raceway surface 4a. The caulked portion 4c is not hardened so as to keep surface hardness after forging. Accordingly, it is possible to have sufficient mechanical strength against rotary bending load applied to the wheel mounting flange 6 and thus to improve the anti-fretting property of the cylindrical portion 4c on which the inner ring 5 is press-fitted and to smoothly perform the bending working of the caulked portion 4c without causing generation of micro cracks.

The outer member 2 is formed, on its outer circumference, with body mount flange 2b to be mounted on a knuckle (not shown) and on its inboard-side of the body mounting flange a cylindrical pilot portion 2c to be fitted into the knuckle. The outer member 2 is also formed, on its inner circumference, with double row outer raceway surfaces 2a, 2a opposing respectively to the double row inner raceway surfaces 4a, 5a of the inner member 1 (i.e. hub wheel 4 and the inner ring 5). The double row rolling elements 3, 3 are contained between the outer and inner raceway surfaces 2a, 2a; 4a, 5a and rollably held therein by cages 7, 7. A seal 8 is mounted on the outboard-side annular opening formed by the outer member 2 and the inner member 1 and a first cap 14 (i.e. sealing cap) later described more in detail is mounted on the inboard-side opening in order to prevent leakage of lubricating grease sealed within the bearing and entering of rain water or dust from outside into the bearing.

Similarly to the hub wheel 4, the outer member 2 is formed of medium-high carbon steel such as S53C including carbon of 0.40∼0.80% by weight and at least the double row outer raceway surfaces 2a, 2a are hardened by high frequency induction hardening as having a surface hardness of 58∼64 HRC.

The outboard-side seal 8 is formed as a united seal comprising a core metal 9 press-fitted into the outboard-side end of the outer member 2 and a sealing member 10 adhered to the core metal 9 via vulcanized adhesion. The core metal 9 is press-formed of austenitic stainless steel sheet (JIS SUS 304 etc) or cold rolled steel sheet (JIS SPCC etc.) as having a L-shaped cross-sectional configuration.

On the other hand, the sealing member 10 is formed of synthetic rubber such as NBR (acrylonitrile-butadiene rubber) etc. and comprises a side lip 10a and a dust lip 10b which extend radially outward with inclination and slidably contact to an outer circumference of a curved base 6b via a predetermined axial interference and a grease lip 10c which extends radially inward with inclination and slidably contact to an outer circumference of the curved base 6b via a predetermined axial interference. The sealing member 10 covers around the outer surface of the core metal 9 and forms a so-called half metal structure to protect the inside of the wheel bearing apparatus with increasing the sealability.

There are examples of material of the sealing member 10 such as HNBR (hydrogenation acrylonitric-butadiene rubber), EPDM (ethylene propylene rubber), ACM (poly-acrylic rubber) superior in heat and chemical resistance, FKM (fluororubber) or silicone rubber other than NBR,.

Although it is shown here the wheel bearing apparatus formed by a double row angular contact ball bearing using balls as rolling elements 3, 3, the present invention is not limited to such a bearing and may be a double row tapered roller bearing using tapered rollers as rolling elements 3.

A pulser ring 11 is press-fitted onto the outer circumference of the inner ring 5. As shown in an enlarged view of Fig. 2, the pulser ring 11 comprises an annular supporting member 12 and a magnetic encoder 13 integrally adhered to the inboard-side surface of the annular supporting member 12 via vulcanized adhesion. The magnetic encoder 13 is formed of elastomer such as synthetic rubber into which ferritic magnetic powder is mingled so that N and S poles are alternately arranged along its circumference to form a rotary encoder for detecting the rotation of a wheel.

The annular supporting member 12 is press-formed of a steel plate such as ferritic stainless steel sheet (JIS SUS 430 etc.) or preserved cold rolled steel sheet as having a L-shaped cross-section and comprises a cylindrical portion 12a press-fitted onto the outer circumference of the inner ring 5 and a standing portion 12b extending radially outward from the cylindrical portion 12a. The magnetic encoder 13 is integrally adhered to the inboard-side surface of the standing portion 12b.

As shown in Fig. 1, the inboard-side opening of the outer member 2 is closed by a first cap (i.e. sealing cap) 14 press-fitted into the inner circumference of inboard-side end of the outer member 2. The first cap 14 has anti-corrosion property and is press-formed of non-magnetic steel sheet such as austenitic stainless steel sheet as having a cup-shape in order to prevent the detecting performance of the rotational speed sensor 22 from being adversely effected by the first cap 14. As shown in Fig. 2, the first cap 14 comprises a cylindrical fitting portion 14a press-fitted into the inner circumference of the inboard-side end of the outer member 2, a disc portion 14c extending radially inward from the fitting portion 14a via a radially reduced portion 14b and opposing to the magnetic encoder 13 via a small axial gap, and a bottom portion 14e extending from the disc portion 14c via a bent portion 14d to cover the inboard-side end of the inner member 1.

In this example, an elastic member 15 of synthetic rubber such as NBR is integrally adhered to the outer circumference of the radially reduced portion 14b of the first cap 14 by vulcanized adhesion as shown in Fig. 2. The elastic member 15 is arranged so that it does not project toward the inboard-side from the side of the disc portion 14c not so as to interfere with the rotational speed sensor 22 and has an annular projection 15a projected radially outward from the outer diameter of the fitting portion 14a.

As shown in the enlarged view of Fig. 4, the inner circumference of the inboard-side end of the outer member 2 is formed with an inside fitting surface 16 into which the fitting portion 14a of the first cap 14 is press-fitted and a retracted surface 18 formed inboard-side from the inside fitting surface 16 via a tapered step portion 17 and having a larger diameter than that of the inside fitting surface 16. The inside fitting surface 16 of the outer member 2 is formed so that the amplitude of chatter vibration in machining is limited to 3µm or less and the annular projection 15a of the elastic member 15 is press-contacted against the retracted surface 18 with being elastically deformed to improve the sealability of the fitting portion 14a.

According to this example, since the inner circumference of the inboard-side end of the outer member 2 is formed by the inside fitting surface 16 and a retracted surface 18 formed inboard-side from the inside fitting surface 16 via a step portion 17, and since the fitting portion 14a of the first cap 14 is press-fitted into the inside fitting surface 16 and the elastic member 15 is press-contacted against the retracted surface 18 having a diameter larger than that of the fitting surface 16, no scratch due to press-fitting would be caused on the retracted surface 18 where the elastic member contacts even if any linear scratch would be caused on the fitting surface 16 of the outer member 2 by the first cap 14 during fitting thereof and also damage to the annular projection 15a is prevented. Accordingly, it is possible to improve the sealability of the fitting portion 14a of the first cap 14 and the reliability of the wheel bearing apparatus.

The inner diameter Dr of the retracted surface 18 of the outer member 2 is set larger than the maximum value of the tolerance of the inner diameter Ds of the inside fitting surface 16 of the outer member 2. This makes it possible to prevent scratches from being caused during fitting of the first cap (sealing cap) 14 on the retracted surface 18 against which the elastic member 15 is press-contacted.

According to this example, a second cap (i.e. sensor cap) 19 is further arranged on the inboard-side of the first cap 14 as shown in Fig. 2. More particularly, an outside fitting surface 20 of the outer member 2 is formed on an opening-side (inboard-side) of the retracted surface 18 via a predetermined step and the second cap (i.e. sensor cap) 19 is press-fitted into the outside fitting surface 20 via a predetermined interference. This makes it possible to minimize the press-fitting stroke of the first cap 14 and thus improve workability of assembly. The outside fitting surface 20 is ground by a formed grinding wheel simultaneously with the double row outer raceway surfaces 2a, 2a and the inside fitting surface 16 where the first cap 14 is press-fit. This makes it possible to improve the accuracy in the roundness and coaxiality of the fitting surfaces 16, 20 and thus to improve the sealability of the fitting portions. In addition, the simultaneous grinding can reduce working steps and therefore manufacturing costs.

The second cap (sensor cap) 19 is formed of preserved and cold-rolled steel sheet as having a cup-shape and comprises a cylindrical fitting portion 19a to be inserted into the outside fitting surface 20 of the outer member 2, a flange portion 19b formed as a double bent portion extending radially outward from the fitting portion 19a and adapted to be closely contacted against the inboard-side end face 2d of the outer member 2, and a bottom portion 19c extending radially inward from the flange portion 19b to close an inboard-side opening of the outer member 2. An insert aperture 21 is formed in the bottom portion 19c of the sensor cap 19 at a horizontal position corresponding to the magnetic encoder 13 into which the rotational speed sensor 22 is inserted and mounted therein.

Since the second cap (sensor cap) 19 is formed with the flange portion 19b closely contacted with the end face 2d of the outer member 2, it is possible to increase the rigidity of the second cap 19 and thus to improve the positioning accuracy of the rotational speed sensor 22 and also to suppress variation of air gap between the rotational speed sensor 22 and the magnetic encoder 13 even if the outer member 2 and the inner member 1 would be relatively inclined by lateral load imparted from wheels.

A securing nut 24 is secured in an aperture 23 formed on the second cap 19 by caulking at the center of the second cap 19 and outboard-side of its bottom portion 19c. The securing nut 24 may be secured on the second cap 19 e.g. by welding, adhesion or press-fitting other than caulking. The rotational speed sensor 22 mounted in the aperture 21 of the second cap 19 can be secured on the second cap 19 by fastening a mounting bolt 26 into the nut 24 via a mounting member 25. Since the securing nut 24 is pulled into the outboard-side surface of the bottom portion 19c by simply fastening the mounting bolt 26, the rotational speed sensor 22 can be firmly secured on the second cap 19 only by caulking of the securing nut 24.

The rotational speed sensor 22 comprises an IC incorporated with a magnetic detecting element such as a Hall element, a magnetic resistance elements (MR elements) etc. for varying characteristics in accordance with flow of magnetic fluxes and a waveform shaping circuit for shaping output waveforms and forms part of the anti-lock brake system (ABS) of an automobile for detecting and controlling the rotational speed of a wheel. The rotational speed sensor 22 is inserted until the tip of the sensor 22 abuts against or close to the disc portion 14c of the first cap 14. This makes it possible to provide a wheel bearing apparatus which can obtain a desirable air gap and improve the assembling workability with eliminating complicated air-gap adjustment and surely seal the inside of the wheel bearing apparatus by the first cap 14 provided with the elastic member 15 on the radially reduced portion 14b.

The second cap 19 is formed of preserving film by performing coating of cation electro-deposition coating. Although the cation electro-deposition coating is performed by connecting articles to a negative electrode, anion electro-deposition coating in which articles are connected to a positive electrode may be used. The anion electro-deposition coating is characterized in that colors of coating is stable and the deposition temperature can be set low, however the cation electro-deposition coating of epoxy resin is more preferable in coating of the second cap 19 due to its superiorities in anti-preserving power and adhesion power of coating.

According to this example, since the second cap (sensor cap) 19 is formed of preserving film of the cation electro-deposition coating, it is possible to prevent generation of corrosion on the fitting portion 19a of the second cap 19 for a long term and thus to obtain excellent sealability between the outside fitting surface 20 and the end face 2d of the outer member 2.

In the half-metal structure of seal 8 previously described in which the sealing member 10 covers the fitting portion of the core metal 9, it may be possible to provide a fitting portion on the outboard-side inner circumference of the outer member 2 and a retracted surface from the fitting portion via a step portion so as to press-contact a portion of the sealing member 10 against the retracted surface.

Further according to this example, a drain 27 is formed on the bottom portion 19c of a bulged portion 28 of the second cap (sensor cap) 19 at its region near to the ground as shown in Fig. 3. The bulged portion 28 is projected toward the inboard-side from the bottom portion 19c by a predetermined distance L. The bulged portion 28 is effective when the knuckle K is projected toward the inboard-side from the end face 2d of the outer member 2 as shown in Fig. 3. Accordingly, it is possible to effectively discharge foreign matters outside without being disturbed by the knuckle K of a vehicle.

In this example, although it has been described a so-called double cap structure in which the second cap (i.e. sensor cap) 19 is arranged at inboard-side of the first cap (i.e. sealing cap) 14, the present invention is not limited to the double cap structure and it may be possible to adopt a single cap structure in which only the sealing cap is fitted into the inner circumference of the outer member. That is, as shown in a modification of Fig. 5, the outer member 2' is formed on the inner circumference of its end a fitting surface 16' into which the fitting portion 14a of the cap 14 is press-fitted, and a retracted surface 18' extending from the fitting surface 16' toward the inboard-side via a tapered step portion 17' and having a diameter larger than that of the fitting surface 16'. The annular projection 15a of the elastic member 15 is elastically deformed and press-contacted against the retracted surface 18' of the outer member 2' when the cap 14 is press-fitted into the fitting surface 16' of the outer member 2'.

As previously described, it is also possible in this modification to provide a wheel bearing apparatus in which no scratch due to press-fitting would be caused on the retracted surface 18' of the outer member 2' during fitting of the cap 14 and also damage to the annular projection 15a is prevented and thus improve the sealability of the fitting portion 14a of the cap 14 and the reliability of the wheel bearing apparatus.

Fig. 6 shows a first embodiment of the present invention comprising a modification of first cap (sealing cap). This first cap 29 has anti-corrosion property and is press-formed of non-magnetic steel sheet such as austenitic stainless steel sheet as having a cup-shape in order to prevent the detecting performance of the rotational speed sensor 22 from being adversely effected by the first cap 29. The first cap 29 comprises a cylindrical fitting portion 29a press-fitted into the inner circumference of the inboard-side end of the outer member 31, and a disc portion 29b extending radially inward from the fitting portion 29a and opposing to the magnetic encoder 13 via a small axial gap.

Similarly to the first example, an elastic member 30 of synthetic rubber such as NBR is integrally adhered to the outer circumference of the fitting portion 29a of the first cap 29 by vulcanized adhesion as shown in Fig. 6. The elastic member 30 is arranged so that it does not project toward the inboard-side from the side of the disc portion 29b not so as to interfere with the rotational speed sensor 22 and has a tapered annular projection 30a projected radially outward from the outer diameter of the fitting portion 29a.

The inner circumference of the inboard-side end of the outer member 31 is formed with an inside fitting surface 16 into which the fitting portion 29a of the first cap 29 is press-fitted and a tapered retracted surface 32 gradually extending from the inside fitting surface 16 toward the opening of the outer member 31 via a tapered step portion 17. The annular projection 30a of the elastic member 30 is elastically deformed and press-contacted against the retracted surface 32 of the outer member 31 when the first cap 29 is press-fitted into the fitting surface 16 of the outer member 31. In this embodiment, the elastic member 30 can be firmly pressed against the tapered surface of the outer member 31 via wedge effect between the tapered surfaces of the annular projection 30a and the retracted surface 32 of the outer member 31 and thus it is possible to further improve the sealability of the fitting portion 29a.

Fig. 7 shows another modification of the first cap (i.e. sealing cap) 29 having an elastic member 33 different in structure from that of the elastic member 30 of Fig. 6. This first cap 29 has the cylindrical fitting portion 29a to be press-fitted into the inner circumference of the inboard-side end of the outer member 2 and the disc portion 29b extending radially inward from the fitting portion 29a and opposing to the magnetic encoder 13 via a small axial gap. An elastic member 33 of synthetic rubber such as NBR is also integrally adhered to the outer circumference of the fitting portion 29a of the first cap 29 by vulcanized adhesion.

The elastic member 33 is adhered to the first cap 29 so that it does not project toward the inboard-side from the side of the disc portion 29b not so as to interfere with the rotational speed sensor 22 and adapted to be elastically deformed and press-contacted against the retracted surface 18 of the outer member 2 when the first cap 29 is press-fitted into the fitting portion 16 of the outer member 2. According to this modification, since whole outer circumference, not the annular projection, of the elastic member 33 is press-contacted against the retracted surface 18 of the outer member 2, it is possible to further improve the sealability of the fitting portion 29a.

Fig. 8 shows a further modification of the fitting portion of the first cap 29 having an elastic member 34 different in structure from those of the elastic members 30, 33 of Figs. 6 and 7. This first cap 29 has the cylindrical fitting portion 29a to be press-fitted into the inner circumference of the inboard-side end of the outer member 2 and the disc portion 29b extending radially inward from the fitting portion 29a and opposing to the magnetic encoder 13 via a small axial gap. The elastic member 34 of synthetic rubber such as NBR is also integrally adhered to the outer circumference of the fitting portion 29a of the first cap 29 by vulcanized adhesion.

The elastic member 34 is adhered to the first cap 29 so that it does not project toward the inboard-side from the side of the disc portion 29b not so as to interfere with the rotational speed sensor 22 and adapted to be elastically deformed and press-contacted against both the step portion 17 and the retracted surface 18 of the outer member 2 when the first cap 29 is press-fitted into the fitting portion 16 of the outer member 2. According to this modification, since the elastic member 34 can fill a space between the outer member 2 and the first cap 29, it is possible to further improve the sealability of the fitting portion 29a.

### Second Embodiment

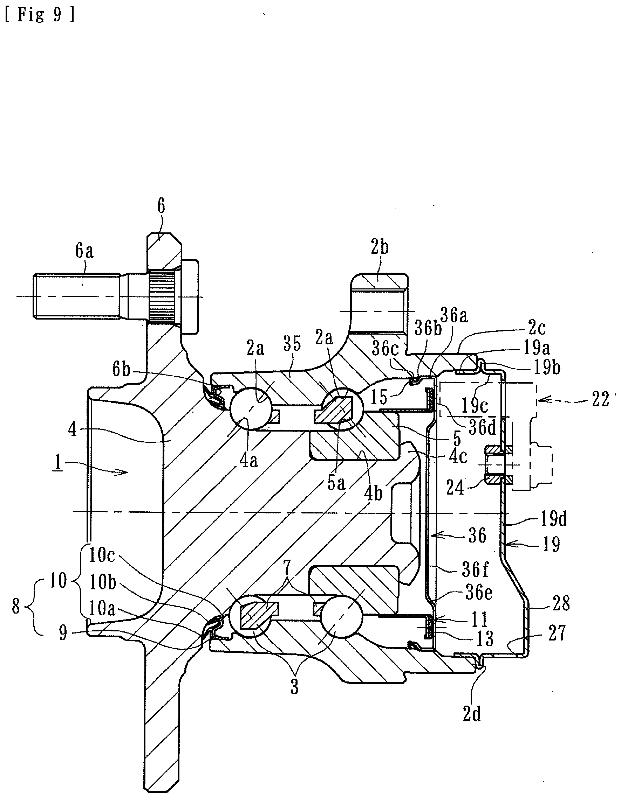

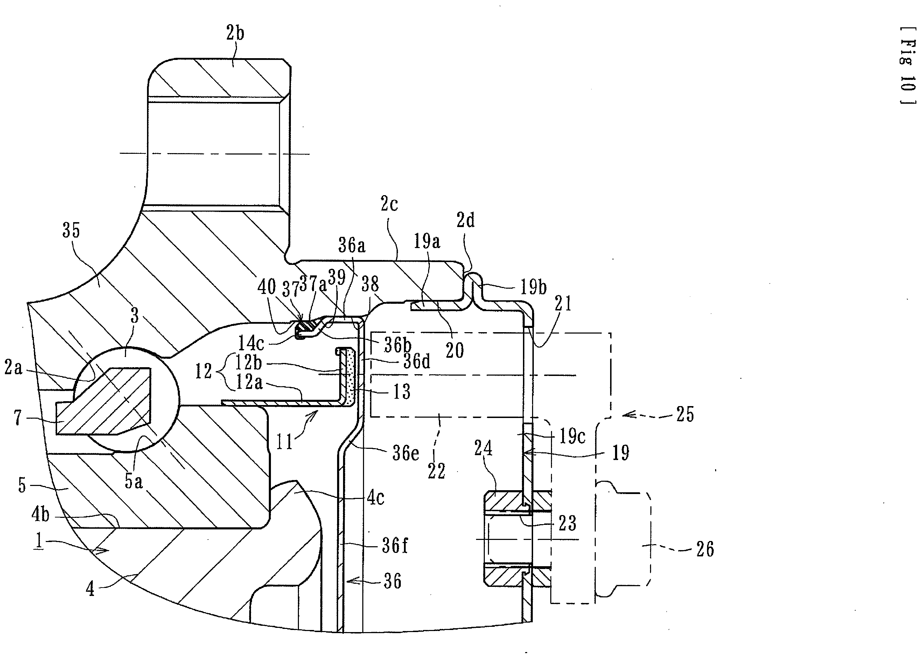

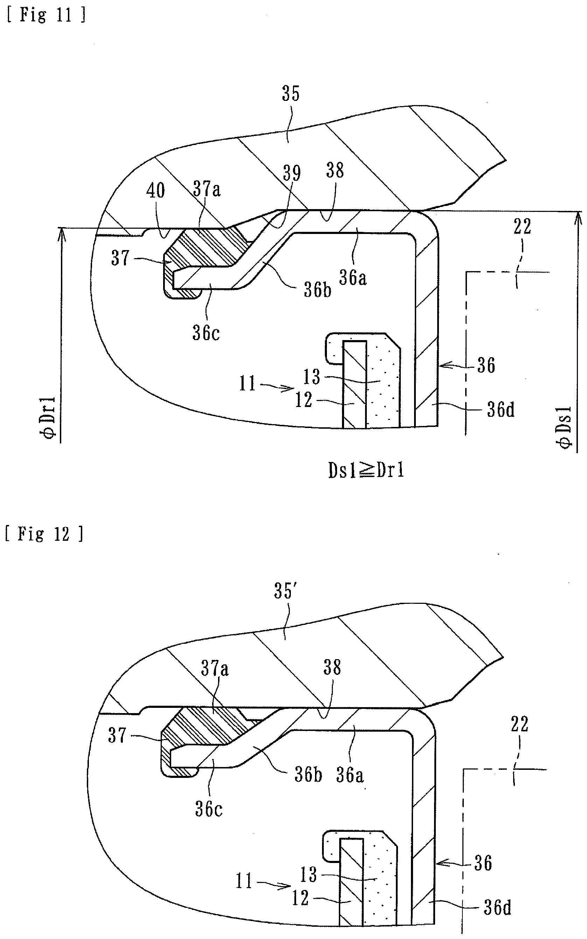

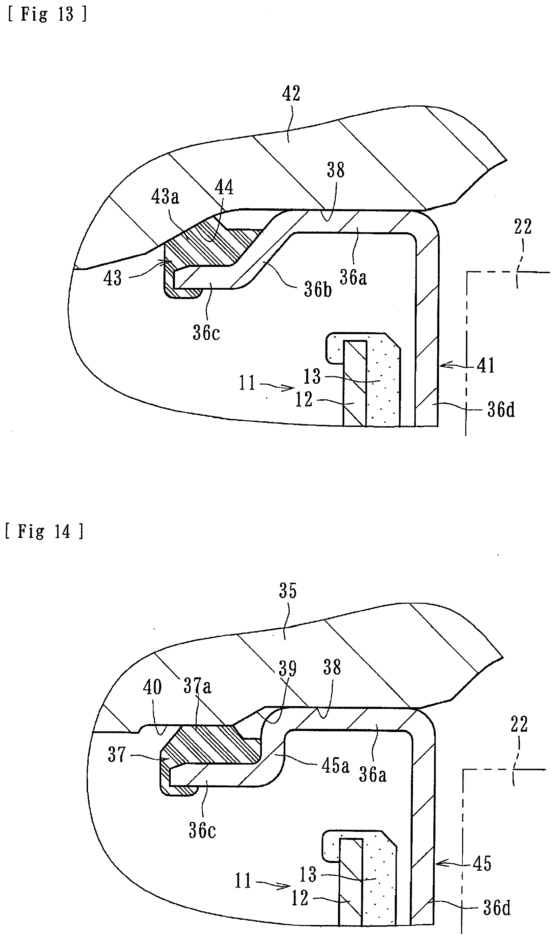

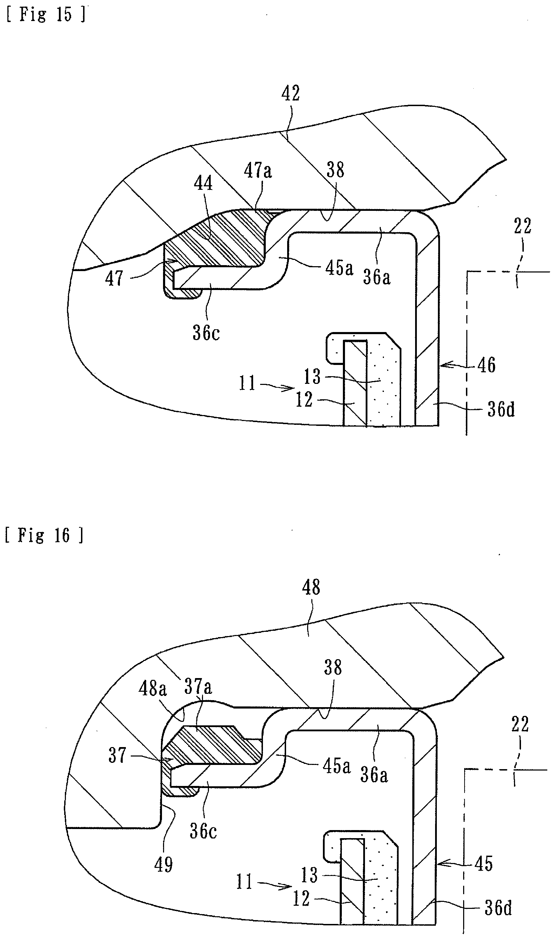

Fig.9 is a longitudinal-section view of a second embodiment of a wheel bearing apparatus of the present invention, Fig.10 is a partially enlarged view of a detecting portion of Fig. 9, Fig.11 is a partially enlarged view of a fitting portion of the first cap of Fig. 9, Fig.12 is a partially enlarged view of one modification of the fitting portion of the first cap of Fig. 11, Fig.13 is a partially enlarged view of another modification of the fitting portion of the first cap of Fig. 11, Fig.14 is a partially enlarged view of one modification of the first cap of Fig. 11, Fig. 15 is a partially enlarged view of one modification of the first cap of Fig. 13, and Fig. 16 is a partially enlarged view of one modification of the fitting portion of the first cap of Fig. 14. This second embodiment is basically same as the first embodiment except only in configurations of the fitting surface of the outer member 2 and the first cap 14. Accordingly, same reference numerals are used also in this embodiment for designating same structural elements as those used in the previous embodiment.

The wheel bearing apparatus of Fig. 9 is a so-called "third generation" type for a driven wheel and comprises an inner member 1, an outer member 35, and double row rolling elements (balls) 3, 3 contained between the inner and outer members 1 and 35.

The outer member 35 is formed, on its outer circumference, with body mount flange 2b to be mounted on a knuckle (not shown) and on its inboard-side of the body mounting flange a cylindrical pilot portion 2c to be fitted into the knuckle. The outer member 35 is also formed, on its inner circumference, with double row outer raceway surfaces 2a, 2a opposing respectively to the double row inner raceway surfaces 4a, 5a of the inner member 1. The double row rolling elements 3, 3 are contained between the outer and inner double row outer raceway surfaces 2a, 2a; 4a, 5a and rollably held therein by cages 7, 7. A seal 8 is mounted on the outboard-side annular opening formed by the outer member 35 and the inner member 1 and a first cap (i.e. sealing cap) 36 later described more in detail is mounted on the inboard-side opening in order to prevent leakage of lubricating grease sealed within the bearing and entering of rain water or dust from outside into the bearing.

Similarly to the hub wheel 4, the outer member 35 is formed of medium-high carbon steel such as S53C including carbon of 0.40∼0.80% by weight and at least the double row outer raceway surfaces 2a, 2a are hardened by high frequency induction hardening as having a surface hardness of 58∼64 HRC.

The first cap 36 has anti-corrosion property and is press-formed of non-magnetic steel sheet such as austenitic stainless steel sheet as having a cup-shape in order to prevent the detecting performance of the rotational speed sensor 22 from being adversely effected by the first cap 36. The first cap 36 comprises a cylindrical fitting portion 36a press-fitted into the inner circumference of the inboard-side end of the outer member 35, a radially reduced portion 36c formed at the outboard-side end of the fitting portion 36a via a an inclined portion 36b, a disc portion 36d extending radially inward from the inboard-side end of the fitting portion 36a and opposing to the magnetic encoder 13 via a small axial gap, and a bottom portion 36f extending from the disc portion 36d via a bent portion 36e and covering the inboard-side end of the inner member 1.

As shown in the enlarged view of Fig. 11, the elastic member 37 of synthetic rubber such as NBR is integrally adhered to the outer circumference region over part of the inclined portion 36b and the radially reduced portion 36c of the first cap 36 by vulcanized adhesion so that the elastic member 37 covers the outer circumference of part of the inclined portion 36b and the radially reduced portion 36c and extends around the tip end of the radially reduced portion 36c. The elastic member 37 is integrally formed with an annular projection 37a projecting radially outward.

On the other hand, the inner circumference of the inboard-side end of the outer member 35 is formed with an inside fitting surface 38 into which the fitting portion 36a of the first cap 36 is press-fitted and a cylindrical surface 40 having a smaller diameter than the fitting surface 38 formed outboard-side from the fitting surface 38 via a tapered step portion 39. The annular projection 37a of the elastic member 37 is elastically deformed and press-contacted against the cylindrical surface 40 of smaller diameter of the outer member 35.

Since the elastic member 37 is adhered to the inclined portion 36b and the radially reduced portion 36c positioned outboard-side (press-fitting direction) of the first cap 36 and thus axially spaced apart from the magnetic encoder 13, it is possible to prevent the first cap 36 and the magnetic encoder 13 from being interfered each other and accordingly it is unnecessary to increase the outer diameter of the first cap 36 or to reduce the outer diameter of the annulus supporting member 12. This improves the degree of freedom of design of the wheel bearing apparatus. In addition, since the magnetic encoder 13 is positioned spaced apart from the radially reduced portion 36c of the first cap 36, it is possible to prevent reduction of detecting accuracy of the magnetic encoder 13 even if the radially reduced portion 36c would be magnetized by component variation caused by bending work during manufacture of the first cap 36.

The inner diameter Ds1 of the inside fitting surface 38 of the outer member 35 is set larger than inner diameter Dr1 of the smaller diameter surface 40. More particularly, the maximum value of the tolerance of the inner diameter (i.e. minimum inner diameter) Ds1 of the retracted inside fitting surface 38 is set larger than the inner diameter Dr1 of the surface of the smaller diameter 40. Accordingly, since a relation of Dr1≦Ds1 can be assured even if there would be caused variations of dimension of the inner diameter by turning work of the inside fitting surface 38 and a difference in diameters between the fitting surface 36a of the first cap 36 and the press-fitting surface of the elastic member 37 can be generated, it is possible to prevent the annular projection 37a of the elastic member 37 from being partially damaged by contact against the inside fitting surface 38 and thus to improve the quality and reliability of the wheel bearing apparatus.

Also in this embodiment, a second cap (i.e. sensor cap) 19 is further arranged on the inboard-side of the first cap 36 as shown in Fig. 10. More particularly, the outside fitting surface 20 of the outer member 35 is formed on an opening-side (inboard-side) via a predetermined step and the second cap (i.e. sensor cap) 19 is press-fitted into the outside fitting surface 20 via a predetermined interference.

The second cap (sensor cap) 19 is press-formed of preserved and cold-rolled steel sheet as having a cup-shape and comprises a cylindrical fitting portion 19a to be inserted into the inner circumference of the inboard side end of the outer member 35, a flange portion 19b formed as a double bent portion extending radially outward from the fitting portion 19a and adapted to be closely contacted against the inboard-side end face 2d of the outer member 35, and a bottom portion 19c extending radially inward from the flange portion 19b via a cylindrical portion to close an inboard-side opening of the outer member 35. An insert aperture 21 is formed in the bottom portion 19c of the sensor cap 19 at a horizontal position corresponding to the magnetic encoder 13 into which the rotational speed sensor 22 is inserted and mounted therein.

Since the second cap (sensor cap) 19 is formed with the flange portion 19b closely contacted with the end face 2d of the outer member 35, it is possible to increase the rigidity of the second cap 19 and thus to improve the positioning accuracy of the rotational speed sensor 22 and also to suppress variation of air gap between the rotational speed sensor 22 and the magnetic encoder 13 even if the outer member 35 and the inner member 1 would be relatively inclined by lateral load imparted from wheels.

Fig. 12 shows a modification of Fig. 11. In this modification, the inner circumference of the end of the outer member 35' is formed only by the inside fitting surface 38 into which the fitting portion 36a of the first cap 36 is press-fitted and thus the annular projection 37a of the elastic member 37 is elastically deformed and press-contacted against the inside fitting surface 38 of the outer member 35' when the first cap 36 is press-fitted.

According to this modification, since the configuration of the inner circumference of the outer member 35' is simplified, reduction of manufacturing cost can be attained by easier manufacturing work. In addition, similarly to the previous embodiment, since the magnetic encoder 13 is positioned spaced apart from the radially reduced portion 36c of the first cap 36, it is possible to prevent the magnetic encoder 13 from being interfered by the first cap 36 and also prevent reduction of detecting accuracy of the magnetic encoder 13 even if the radially reduced portion 36c would be magnetized by component variation caused by bending work during manufacture of the first cap 36.

Fig. 13 shows a modification of the previous first cap 36 (Fig. 11). This first cap 41 has anti-corrosion property and is press-formed of non-magnetic steel sheet such as austenitic stainless steel sheet as having a cup-shape in order to prevent the detecting performance of the rotational speed sensor 22 from being adversely effected by the first cap 41. The first cap 41 comprises a cylindrical fitting portion 36a press-fitted into the inside fitting surface 38 of an outer member 42, a radially reduced portion 36c formed at an outboard-side end of the fitting portion 36a via an inclined portion 36b, and a disc portion 36d extending radially inward from an inboard-side end of the fitting portion 36a and opposing to the magnetic encoder 13 via a small axial gap.

Also in this modification, an elastic member 43 of synthetic rubber such as NBR is integrally adhered to the outer circumferences of the inclined portion 36b and the radially reduced portion 36c of the first cap 41 by vulcanized adhesion so that the elastic member 43 covers the outer circumference of part of the inclined portion 36b and the radially reduced portion 36c and extends around the tip end of the radially reduced portion 36c. The elastic member 43 is integrally formed with an annular projection 43a projecting radially outward and having a tapered surface.

On the other hand, the inner circumference of the inboard-side end of the outer member 42 is formed with the inside fitting surface 38 into which the fitting portion 36a of the first cap 41 is press-fitted and a step portion 44 tapered toward the outboard-side from the inside fitting surface 38. According to this modification, since the annular projection 43a having the tapered surface of the elastic member 43 is elastically deformed and press-contacted against the tapered step portion 44, the elastic member 43 can be firmly pressed against the step portion 44 of the outer member 42 via wedge effect and thus it is possible to further improve the sealability of the fitting portion 36a.

Fig. 14 shows another modification of the previous first cap 36 (Fig. 11) having partially different configurations. This first cap 45 is press-formed of non-magnetic steel sheet such as austenitic stainless steel sheet as having a cup-shape and comprises a cylindrical fitting portion 36a press-fitted into the inside fitting surface 38 of an outer member 35, a radially reduced portion 36c formed at an outboard-side end of the fitting portion 36a via a bent portion 45a, and a disc portion 36d extending radially inward from an inboard-side end of the fitting portion 36a and opposing to the magnetic encoder 13 via a small axial gap.

According to this modification, the elastic member 37 is elastically deformed and press-contacted against the radially reduced surface 40 of the outer member 35 when the first cap 45 is press-fitted. Since the radially reduced portion 36c is formed via the vertically bent portion 45a, it is possible to increase the strength and rigidity of the first cap 45 itself and reduce an axial size of the first cap 45.

Fig. 15 shows another modification of the previous first cap 41 (Fig. 13) having partially different configurations in the cap 41 and the elastic member 43. This first cap 46 is press-formed of non-magnetic steel sheet such as austenitic stainless steel sheet as having a cup-shape and comprises a cylindrical fitting portion 36a press-fitted into the inside fitting surface 38 of an outer member 42, a radially reduced portion 36c formed at an outboard-side end of the fitting portion 36a via a bent portion 45a, and a disc portion 36d extending radially inward from an inboard-side end of the fitting portion 36a and opposing to the magnetic encoder 13 via a small axial gap.

Also in this modification, an elastic member 47 of synthetic rubber such as NBR is integrally adhered to the outer circumferences of the bent portion 45a and the radially reduced portion 36c of the first cap 46 by vulcanized adhesion so that the elastic member 47 covers the outer circumference of part of the bent portion 45a and the radially reduced portion 36c and extends around the tip end of the radially reduced portion 36c. The elastic member 47 is formed of synthetic rubber such as NBR etc. and integrally formed with an annular projection 47a projecting radially outward and having a tapered surface. The elastic member 47 is elastically deformed and press-contacted against the step portion 44. According to this modification, since the radially reduced portion 36c is formed via the vertically bent portion 45a, it is possible to increase the strength and rigidity of the first cap 46 itself and reduce an axial size of the first cap 46. In addition, since the elastic member 47 fills an annular space formed by the inside fitting portion 38 of the outer member 42 and the tapered step portion 44, it is possible to further increase the degree of close contact of the elastic member 47 and accordingly the sealability of the fitting portion 36a.

Fig. 16 shows a modification of the previous first cap 45 (Fig. 14) having partially different configurations of the inner circumference of the end of the outer member 35. The inner circumference of the end of the outer member 48 is formed with the inside fitting surface 38 into which the fitting portion 36a of the first cap 45 is press-fitted and a step portion 49 vertically extending toward radially inward from the inside fitting surface 38 via a scooped out portion 48a. According to this modification, the annular projection 37a of the elastic member 37 is elastically deformed and press-contacted against the step portion 49 of the outer member 48 when the first cap 45 is press-fitted into the outer member 48. In addition, since the annular projection 37a of the elastic member 37 is axially abutted against the vertically extending step 49 not against the inner circumference of the outer member 48, it is possible to prevent the elastic member 37 from being damaged and thus to improve the sealability and reliability.

### Third Example

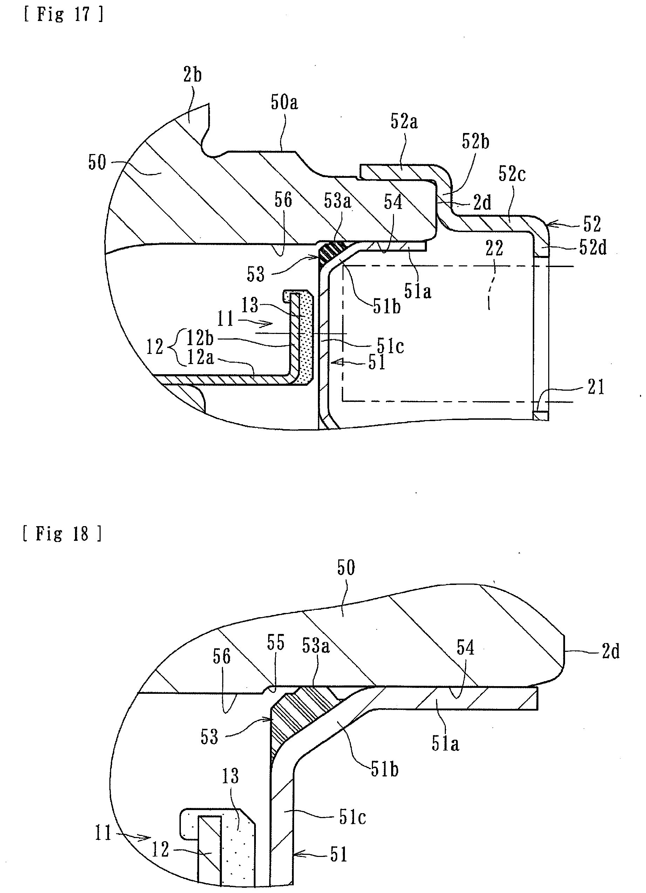

Fig. 17 is a longitudinal-section view of a third example of a wheel bearing apparatus not forming part of the present invention, and Fig.18 is a partially enlarged view of a fitting portion of the first cap of Fig. 17. This third example is basically same as the second embodiment (Fig. 10) except only in configurations the first cap (sealing cap) 36 and the second cap (sensor cap) 19 and the press-fitting form. Accordingly, same reference numerals are used also in this example for designating same structural elements as those used in the previous embodiment.

In the third example, an outer member 50 has, on its outer circumference, integrally formed body mounting flange 2b and a cylindrical pilot portion 50a inboard-side of the body mounting flange 2b adapted to be fitted to a knuckle (not shown). A first cap (sealing cap) 51 for sealing the inboard-side opening of the outer member 50 is press-fitted into the outer member 50 and a second cap (sensor cap) 52 is press-fitted onto the outer member 50 at the inboard-side of the first cap 51.

The first cap 51 has anti-corrosion property and is press-formed of non-magnetic steel sheet such as austenitic stainless steel sheet as having a cup-shape in order to prevent the detecting performance of the rotational speed sensor 22 from being adversely effected by the first cap 51. As shown in Fig. 17, the first cap 51 comprises a cylindrical fitting portion 51a press-fitted into the inner circumference of the inboard-side end of the outer member 50, a disc portion 51c extending radially inward from the outboard-side end of the fitting portion 51a via an inclined portion 51b and opposing to the magnetic encoder 13 via a small axial gap to close the inboard-side end of the outer member 50. The elastic member 53 of synthetic rubber such as NBR is integrally adhered to the outer circumference of the inclined portion 51b of the first cap 51 by vulcanized adhesion and integrally formed with an annular projection 53a projecting radially outward.

On the other hand, the second cap (sensor cap) 52 is press-formed of preserved and cold-rolled steel sheet as having a cup-shape and comprises a cylindrical fitting portion 52a to be inserted onto the outer circumference of the inboard-side end of the pilot portion 50a, a flange portion 52b extending from the fitting portion 52a and adapted to be closely contacted against the inboard-side end face 2d of the outer member 50, and a bottom portion 52d extending radially inward from the flange portion 52b via a cylindrical portion 52c to close an inboard-side opening of the outer member 50. An insert aperture 21 is formed in the bottom portion 52d of the sensor cap 52 at a horizontal position corresponding to the magnetic encoder 13 into which the rotational speed sensor 22 is inserted and mounted therein.

As shown in the enlarged view of Fig. 18, the inner circumference of the inboard-side end of the outer member 50 is formed with a inside fitting surface 54 into which the fitting portion 51a of the first cap 51 is press-fitted and a radially reduced cylindrical surface 56 having smaller diameter than the inside fitting surface 54 via a step 55. The annular projection 53a of the elastic member 53 is elastically deformed and press-contacted against the inside fitting surface 54 when the first cap 51 is press-fitted. The annular projection 53a of the elastic member 53 may be press-contacted against the radially reduced surface 56 not against the inside fitting surface 54. This makes it possible to prevent the annular projection 53a from being partially damaged by linear scratches which would be caused on the inside fitting surface 54 when the first cap 51 is press-fitted.

According to the third example, since the first cap 51 is press-fitted into the outer member 50 so that the opening of the cap 51 is directed to the inboard side and the elastic member 53 is adhered to the outer circumference of the inclined portion 51b of the cap 51 facing to the press-fitting direction, the side of the magnetic encoder 13 and the fitting portion 51a of the cap 51 are not positioned on a same plane even if the inclined portion 51b and the magnetic encoder 13 are arranged at axially near positions each other. Thus, it is possible to prevent the cap 51 and the magnetic encoder 13 from being interfered each other and thus to eliminate necessity for increasing the outer diameter of the cap 51 or reducing the outer diameter of the supporting annulus 12 to avoid the interference of them. Accordingly, the degree of freedom of design can be increased.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industry

The present invention can be applied to any wheel bearing apparatus of an inner ring rotation type for a driven wheel type in which any rolling elements such as balls or tapered rollers are used and the first cap is mounted on the inboard-side end of the outer member.

### Description of Reference numerals

- 1: inner member
- 2, 2', 31, 35, 35' 42, 48, 50: outer member
- 2a: outer raceway surface
- 2b: body mounting flange
- 2c, 50a: pilot portion
- 2d: inboard-side end face of outer member
- 3: rolling element
- 4: hub wheel
- 4a, 5a: inner raceway surface
- 4b: cylindrical portion
- 4c: caulked portion
- 5: inner ring
- 6: wheel mounting flange
- 6a: hub bolt
- 6b: inboard-side base of wheel mounting flange
- 7: cage
- 8: seal
- 9: core metal
- 10: sealing member
- 10a: side lip
- 10b: dust lip
- 10c: grease lip
- 11: pulser ring
- 12: supporting annulus
- 12a, 52c: cylindrical portion
- 12b: standing portion
- 13: magnetic encoder
- 14, 29, 36, 41, 45, 46, 51: first cap (sealing cap)
- 14a, 19a, 29a, 36a, 51a, 52a: fitting portion
- 14b, 36c: radially reduced portion
- 14c, 29b, 36d, 51c: disc portion
- 14d, 36e, 45a: bent portion
- 14e, 19c, 36f, 52d: bottom portion
- 15, 30, 33, 34, 37, 43, 47, 53: elastic member
- 15a, 30a, 37a, 43a, 47a, 53a: annular projection
- 16, 38, 54: inside fitting portion
- 16': fitting surface
- 17,17', 39, 44, 49, 55: step portion
- 18, 18', 32: retracted surface
- 19: sensor cap
- 19b, 52b: flange portion
- 19c: bottom portion
- 20: outside fitting surface
- 21: aperture
- 22: rotational speed sensor
- 23: aperture
- 24: securing nut
- 25: mounting member
- 26: mounting bolt
- 27: drain
- 28: bulged portion
- 36b: inclined portion
- 40, 56: radially reduced portion
- 61: inner member
- 62: outer member
- 62a, 62b: outer raceway surface
- 62c: body mounting flange
- 63a, 63b: ball
- 64: hub wheel
- 64a, 65a: inner raceway surface
- 64b: cylindrical portion
- 64c: caulked portion
- 64d: shaft portion
- 65: inner ring
- 66: wheel mounting flange
- 67: seal
- 68: second cap (sensor cap)
- 68a: fitting portion
- 68b: radially reduced portion
- 68c: bottom portion
- 69: pulser ring
- 70: supporting annulus
- 71: magnetic encoder
- 72: elastic member
- 72a: annular projection
- 73: rotational speed sensor
- 74: circular recess
- 75: securing nut
- 75a: female thread
- Ds, Ds1: inner diameter of inside fitting surface
- Dr: inner diameter of retracted surface
- Dr1: inner diameter of radially reduced surface
- L: projected length of bulged portion from bottom portion
- PCDi: pitch circle diameter of ball row opposite to wheel mounting flange side
- PCDo: pitch circle diameter of ball row of wheel mounting flange side
- di: ball diameter of ball row opposite to wheel mounting flange side
- do: ball diameter of ball row of wheel mounting flange side
- Zi: number of balls opposite to wheel mounting flange side
- Zo: number of balls of wheel mounting flange side

## Claims

1. A wheel bearing apparatus comprising:
an outer member (2, 2', 31) integrally formed on its outer circumference with a body mounting flange (2b) to be mounted on a body of a vehicle and on its inner circumference with double row outer raceway surfaces (2a, 2a);
an inner member (1) including a hub wheel (4) and at least one inner ring (5), the hub wheel (4) being integrally formed on its one end with a wheel mounting flange (6) and having a cylindrical portion (4b) axially extending from the wheel mounting flange (6), the inner ring (5) being press-fitted onto the cylindrical portion (4b) of the hub wheel (4), the inner member (1) being formed on its outer circumference with double row inner raceway surfaces (4a, 5a) opposing to the double row outer raceway surfaces (2a, 2a);
double row rolling elements (3, 3) contained between the outer raceway surfaces (2a, 2a) and inner raceway surfaces (4a, 5a) respectively of the outer member (2, 2', 31) and the inner member (1);
a seal (8) mounted in an outboard-side opening of annular openings formed between the outer member (2, 2', 31) and the inner member (1);
a first cap (14, 29) press-fitted into an inboard-side opening of the outer member (2, 2', 31), the first cap (14, 29) comprising a cylindrical fitting portion (14a, 29a) press-fitted into an inside fitting surface (16, 16') of the outer member (2, 2', 31) and a bottom portion (14e) extending radially inward from the fitting portion (14a, 29a) to cover the inboard-side end of the inner member (1), and the first cap (14, 29) being integrally adhered on its inboard-side outer circumference of the fitting portion (14a, 29a) with an elastic member (15, 30, 33, 34) of synthetic rubber via vulcanized adhesion and the elastic member (15, 30, 33, 34) projecting radially outward beyond the outer diameter of the fitting portion (14a, 29a); and
wherein the inner circumference of the inboard-side end of the outer member (2, 2', 31) is formed by an inside fitting surface (16, 16') into which the first cap (14, 29) is press-fitted and a retracted surface (18, 18', 32) formed inboard-side from the inside fitting surface (16, 16') via a step portion (17, 17') and having a larger diameter than that of the inside fitting surface (16, 16'); **characterized in:**
**that** the retracted surface (32) of the outer member (31) is formed as a tapered surface gradually extending toward the open end and the elastic member (30) has a tapered surface press-contacted against the retracted surface (32);
**that** the elastic member (15, 30, 33, 34) is press-contacted against the retracted surface (18, 18', 32) with being elastically deformed; and
**that** the retracted surface (32) has a larger diameter than that of the inside fitting surface (16, 16') in order not to cause a scratch due to press-fitting on the retracted surface (32) where the elastic member (30) contacts, even if any linear scratch would be caused on the fitting surface (16, 16') of the outer member (31) by the first cap (14, 29) during fitting thereof, and to prevent damage to the elastic member (30), and thus to improve the sealability of the fitting portion (14a, 29a) of the first cap (14, 29) and the reliability of the wheel bearing apparatus.

2. A wheel bearing apparatus of claim 1 wherein the inner diameter (Dr) of the retracted surface (18, 18') is set larger than the maximum value of the tolerance of the inner diameter (Ds) of the inside fitting surface (16, 16').

3. A wheel bearing apparatus of claim 1 wherein the pulser ring (11) having circumferentially and equidistantly varying magnetic characteristics is press-fitted onto the inner ring (5), the first cap (14) is formed of non-magnetic steel sheet, and a rotational speed sensor (22) is opposed to the pulser ring (11) via a predetermined axial air gap through the first cap (14) with the rotational speed sensor (22) being abutted against or arranged close to the first cap (14).

4. A wheel bearing apparatus comprising:
an outer member (35, 35', 42, 48) integrally formed on its outer circumference with a body mounting flange (2b) to be mounted on a body of a vehicle and on its inner circumference with double row outer raceway surfaces (2a, 2a);
an inner member (1) including a hub wheel (4) and at least one inner ring (5), the hub wheel (4) integrally formed on its one end with a wheel mounting flange (6) and having a cylindrical portion (4b) axially extending from the wheel mounting flange (6), the inner ring (5) being press-fitted onto the cylindrical portion (4b) of the hub wheel (4), the inner member being formed on its outer circumference with double row inner raceway surfaces (4a, 5a) opposing to the double row outer raceway surfaces (2a, 2a);
double row rolling elements (3, 3) contained between the outer raceway surfaces (2a, 2a) and inner raceway surfaces (4a, 5a) respectively of the outer member (35, 35', 42, 48) and the inner member (1);
a seal (8) mounted in an outboard-side opening of annular openings formed between the outer member (35, 35', 42, 48) and the inner member (1);
a first cap (36, 41, 45, 46) press-fitted into an inboard-side opening of the outer member (2, 2', 31), an elastic member (37, 43, 47) of synthetic rubber being integrally adhered on the outer circumference of the first cap (36, 41, 45, 46) via vulcanized adhesion, and
a pulser ring (11) press-fitted onto the outer circumference of the inner ring (5);
wherein the elastic member (37, 43, 47) is press-contacted against the outer member (35, 35', 42, 48) with being elastically deformed; and
wherein the elastic member (37, 43, 47) and the pulser ring (11) are arranged at positions axially spaced apart each other **characterized in:**
**that** the fitting portion (36a) of the cap (36, 41) is press-fitted into the inboard-side inner circumference of the outer member (35, 35', 42) so that the tip end of the fitting portion (36a) is directed to the outboard side, a radially reduced portion (36c) is further extended from the tip end of the fitting portion (36a) via an inclined portion (36b), and the elastic member (37, 43) adhered to the cap (36, 41) so that the elastic member (37, 43) covers the outer circumference of the inclined portion (36b) and the radially reduced portion (36c) and extends around the tip end of the radially reduced portion (36c).

5. A wheel bearing apparatus of claim 4 wherein the inboard-side inner circumference of the outer member (42) comprises an inside fitting surface (38) into which the first cap (41, 46) is press-fitted and a cylindrical surface of a smaller diameter than the inside fitting surface (38) extending from the inside fitting surface (38) via a step portion (44), the elastic member (43, 47) is formed with an annular projection (43a) projected radially outward, and the step portion (44) of the outer member (42) is formed as having a tapered surface against which the annular projection (43a) of the elastic member (43, 47) is press-contacted with being elastically deformed.

6. A wheel bearing apparatus of claim 5 wherein the elastic member (47) is press-contacted against the inside fitting surface (38) and the step portion (44) of the outer member (42) so that it fills an annular space formed by the inside fitting surface (38) and the step portion (44).

7. A wheel bearing apparatus of claim 5 wherein the maximum value of the tolerance of the inner diameter (Ds1) of the inside retracted fitting surface (38) is set larger than the inner diameter (Dr1) of the surface of the smaller diameter (40).

8. A wheel bearing apparatus of claims 1 or 4 wherein the second cap (19) is arranged on the inboard-side of the first cap (14, 36), the second cap (19) comprises a fitting portion (19a) to be press-fitted into the end of the outer member (2, 35), a flange portion (19b) to be closely contacted to an inboard-side end (2d) of the outer member (2, 35) and a bottom portion (19c) for closing the inboard-side opening of the outer member (2, 35), an aperture (21) is formed on the bottom portion (19b) at a horizontal position corresponding to the pulser ring (11), and a rotational speed sensor (22) is mounted in the aperture (21).

9. A wheel bearing apparatus of claim 8 wherein the second cap (19) is coated by preserving coating film comprising cation electro-deposition.

## Patentansprüche

1. Radlagervorrichtung, umfassend:
ein Außenteil (2, 2', 31), das auf seinem Außenumfang mit einem Karosseriebefestigungsflansch (2b) zur Befestigung an einer Karosserie eines Fahrzeugs und auf seinem Innenumfang mit doppelreihigen äußeren Laufbahnflächen (2a, 2a) angeformt ist;
ein Innenteil (1), einschließlich einer Radnabe (4) und wenigstens eines Innenrings (5), wobei die Radnabe (4) an ihrem einen Ende mit einem Radbefestigungsflansch (6) angeformt ist und einen zylindrischen Abschnitt (4b) aufweist, der sich axial von dem Radbefestigungsflansch (6) erstreckt, wobei der Innenring (5) auf den zylindrischen Abschnitt (4b) der Radnabe (4) aufgepresst ist und das Innenteil (1) auf seinem Außenumfang mit doppelreihigen inneren Laufbahnflächen (4a, 5a), die den doppelreihigen äußeren Laufbahnflächen (2a, 2a) gegenüber liegen, gebildet ist;
doppelreihige Wälzkörper (3, 3), die zwischen den äußeren Laufbahnflächen (2a, 2a) bzw. den inneren Laufbahnflächen (4a, 5a) des Außenteils (2, 2', 31) und des Innenteils (1) aufgenommen sind;
eine Dichtung (8), die in einer außenseitigen Öffnung von ringförmigen Öffnungen montiert ist, die zwischen dem Außenteil (2, 2', 31) und dem Innenteil (1) gebildet sind;
eine erste Kappe (14, 29), die in eine innenseitige Öffnung des Außenteils (2, 2', 31) eingepresst ist, wobei die erste Kappe (14, 29) einen zylindrischen Befestigungsabschnitt (14a, 29a), der in eine innenseitige Befestigungsfläche (16, 16') des Außenteils (2, 2', 31) eingepresst ist, und einen Bodenabschnitt (14e) umfasst, das sich von dem Befestigungsabschnitt (14a, 29a) radial nach innen erstreckt, um das innenseitige Ende des Innenteils (1) zu bedecken, und wobei die erste Kappe (14, 29) auf ihrem innenseitigen Außenumfang des Befestigungsabschnitts (14a, 29a) mit einem elastischen Teil (15, 30, 33, 34) aus Synthesekautschuk über eine Anvulkanisierung angeformt ist, und wobei das elastische Teil (15, 30, 33, 34) radial nach außen über den Außendurchmesser des Befestigungsabschnitts (14a, 29a) hinausragt; und
wobei der Innenumfang des innenseitigen Endes des Außenteils (2, 2', 31) durch eine Innenbefestigungsfläche (16, 16'), in welche die erste Kappe (14, 29) eingepresst ist, und eine zurückgesetzte Fläche (18, 18', 32) gebildet wird, die innenseitig von der Innenbefestigungsfläche (16, 16') über einen Stufenabschnitt (17, 17') gebildet wird und einen größeren Durchmesser aufweist als der Durchmesser der Innenbefestigungsfläche (16, 16');
**dadurch gekennzeichnet,**
**dass** die zurückgesetzte Fläche (32) des Außenteils (31) als eine konische Fläche gebildet ist, die sich allmählich zu dem offenen Ende hin erstreckt, und das elastische Teil (30) eine konische Fläche aufweist, die gegen die zurückgesetzte Fläche (32) in Druckkontakt steht;
**dass** das elastische Teil (15, 30, 33, 34) gegen die zurückgesetzte Fläche (18, 18', 32) in Druckkontakt steht und dabei elastisch verformt wird; und
**dass** die zurückgesetzte Fläche (32) einen größeren Durchmesser aufweist als der Durchmesser der Innenbefestigungsfläche (16, 16'), um durch das Aufpressen auf der zurückgesetzten Fläche (32) keinen Kratzer zu verursachen, wo das elastische Teil (30) Kontakt hat, selbst wenn ein linearer Kratzer auf der Befestigungsfläche (16, 16') des Außenteils (31) durch die erste Kappe (14, 29) während des Befestigens davon verursacht würde, und um eine Beschädigung an dem elastischen Teil (30) zu verhindern und somit die Abdichtbarkeit des Befestigungsteils (14a, 29a) der ersten Kappe (14, 29) und die Zuverlässigkeit der Radlagervorrichtung zu verbessern.

2. Radlagervorrichtung nach Anspruch 1, wobei der Innendurchmesser (Dr) der zurückgesetzten Fläche (18, 18') größer festgelegt ist als der Maximalwert der Toleranz des Innendurchmessers (Ds) der Innenbefestigungsfläche (16, 16').

3. Radlagervorrichtung nach Anspruch 1, wobei der Impulsgeberring (11) mit umlaufenden und gleichmäßig beabstandeten veränderlichen magnetischen Eigenschaften auf den Innenring (5) aufgepresst ist, wobei die erste Kappe (14) aus nicht magnetischem Stahlblech gebildet ist und ein Drehzahlsensor (22) über einen vorgegebenen axialen Luftspalt durch die erste Kappe (14) dem Impulsgeberring gegenüber liegt, wobei der Drehzahlsensor (22) an die erste Kappe (14) angrenzt oder in der Nähe der ersten Kappe (14) angeordnet ist.

4. Radlagervorrichtung, umfassend:
ein Außenteil (35, 35', 42, 48), das mit einem Karosseriebefestigungsflansch (2b) zur Befestigung an einer Karosserie eines Fahrzeugs auf seinem Außenumfang und auf seinem Innenumfang mit doppelreihigen äußeren Laufbahnflächen (2a, 2a) angeformt ist;
ein Innenteil (1), einschließlich einer Radnabe (4) und wenigstens eines Innenrings (5), wobei die Radnabe (4) an ihrem einen Ende mit einem Radbefestigungsflansch (6) angeformt ist und einen zylindrischen Abschnitt (4b) aufweist, der sich axial von dem Radbefestigungsflansch (6) erstreckt, wobei der Innenring (5) auf den zylindrischen Abschnitt (4b) der Radnabe (4) aufgepresst ist, wobei das Innenteil auf seinem Außenumfang mit doppelreihigen inneren Laufbahnflächen (4a, 5a), die den doppelreihigen äußeren Laufbahnflächen (2a, 2a) gegenüber liegen, gebildet ist;
doppelreihige Wälzkörper (3, 3), die zwischen den äußeren Laufbahnflächen (2a, 2a) bzw. den inneren Laufbahnflächen (4a, 5a) des Außenteils (35, 35', 42, 48) und des Innenteils (1) aufgenommen sind;
eine Dichtung (8), die in einer außenseitigen Öffnung von ringförmigen Öffnungen montiert ist, die zwischen dem Außenteil (35, 35', 42, 48) und dem Innenteil (1) gebildet sind;
eine erste Kappe (36, 41, 45, 46), die in eine innenseitige Öffnung des Außenteils (2, 2', 31) eingepresst ist, wobei ein elastisches Teil (37, 43, 47) aus Synthesekautschuk auf dem Außenumfang der ersten Kappe (36, 41, 45, 46) über eine Anvulkanisierung angeformt ist, und
einen Impulsgeberring (11), der auf den Außenumfang des Innenrings (5) aufgepresst ist;
wobei das elastische Teil (37, 43, 47) gegen das Außenteil (35, 35', 42, 48) in Druckkontakt steht und dabei elastisch verformt wird; und
wobei das elastische Teil (37, 43, 47) und der Impulsgeberring (11) an axial voneinander beabstandeten Positionen angeordnet sind, **dadurch gekennzeichnet, dass**:
der Befestigungsabschnitt (36a) der Kappe (36, 41) in den innenseitigen Innenumfang des Außenteils (35, 35', 42) dergestalt eingepresst ist, dass das spitze Ende des Befestigungsabschnitts (36a) zu der Außenseite gerichtet ist, wobei ein radial reduzierter Abschnitt (36c) von dem spitzen Ende des Befestigungsabschnitts (36a) über einen geneigten Abschnitt (36b) weiter verlängert wird und wobei das elastische Teil (37, 43) an die Kappe (36, 41) dergestalt angehaftet ist, dass das elastische Teil (37, 43) den Außenumfang des geneigten Abschnitts (36b) und den radial reduzierten Abschnitt (36c) bedeckt und sich um das spitze Ende des radial reduzierten Abschnitts (36c) herum erstreckt.

5. Radlagervorrichtung nach Anspruch 4, wobei der innenseitige Innenumfang des Außenteils (42) eine Innenbefestigungsfläche (38), in welche die erste Kappe (41, 46) eingepresst ist, und ein zylindrische Fläche mit einem kleineren Durchmesser als die Innenbefestigungsfläche (38) umfasst, die sich von der Innenbefestigungsfläche (38) über einen Stufenabschnitt (44) erstreckt, wobei das elastische Teil (43, 47) mit einer ringförmigen Auskragung (43a), die radial nach außen ragt, gebildet ist, und der Stufenabschnitt (44) des Außenteils (42) dergestalt gebildet ist, dass es eine konische Fläche aufweist, gegen welche die ringförmige Auskragung (43a) des elastischen Teils (43, 47) in Druckkontakt steht und dabei elastisch verformt wird.

6. Radlagervorrichtung nach Anspruch 5, wobei das elastische Teil (47) gegen die Innenbefestigungsfläche (38) und den Stufenabschnitt (44) des Außenteils (42) dergestalt in Druckkontakt steht, dass es einen ringförmigen Raum füllt, der durch die Innenbefestigungsfläche (38) und den Stufenabschnitt (44) gebildet wird.

7. Radlagervorrichtung nach Anspruch 5, wobei der Maximalwert der Toleranz des Innendurchmessers (Ds1) der zurückgesetzten Innenbefestigungsfläche (38) größer festgelegt ist als der Innendurchmesser (Dr1) der Fläche mit dem kleineren Durchmesser (40).

8. Radlagervorrichtung nach Anspruch 1 oder 4, wobei die zweite Kappe (19) auf der Innenseite der ersten Kappe (14, 36) angeordnet ist, wobei die zweite Kappe (19) einen Befestigungsabschnitt (19a) zum Einpressen in das Ende des Außenteils (2, 35), einen Flanschabschnitt (19b) zur engen Kontaktherstellung mit einem innenseitigen Ende (2d) des Außenteils (2, 35) und einen Bodenabschnitt (19c) zum Schließen der innenseitigen Öffnung des Außenteils (2, 35) umfasst, wobei an dem Bodenabschnitt (19b) an einer horizontalen Position eine Öffnung (21) gebildet ist, die dem Impulsgeberring (11) entspricht, und ein Drehzahlsensor (22) in der Öffnung (21) befestigt ist.

9. Radlagervorrichtung nach Anspruch 8, wobei die zweite Kappe (19) mit einem Schutzschichtfilm beschichtet ist, der eine Kationen-Elektrotauchbeschichtung umfasst.

## Revendications

1. Appareil roulement de roue, comprenant :
un élément externe (2, 2', 31) formé intégralement sur sa circonférence externe avec une bride de montage de caisse (2b) à monter sur une caisse de véhicule et sur sa circonférence interne avec des surfaces de chemin de roulement (2a, 2a) externes à double rangée ;
un élément interne (1) comprenant un moyeu de roue (4) et au moins une bague interne (5), le moyeu de roue (4) étant formé intégralement sur l'une de ses extrémités avec une bride de montage de roue (6) et possédant une portion cylindrique (4b) qui s'étend axialement depuis la bride de montage de roue (6), la bague interne (5) étant montée par ajustement serré sur la portion cylindrique (4b) du moyeu de roue (4), l'élément interne (1) étant formé sur sa circonférence externe avec des surfaces de chemin de roulement (4a, 5a) internes à double rangée à l'opposé des surfaces de chemin de roulement (2a, 2a) externes à double rangée ;
des éléments de roulement (3, 3) à double rangée contenus entre les surfaces de chemin de roulement (2a, 2a) externes et les surfaces de chemin de roulement (4a, 5a) internes respectives de l'élément externe (2, 2', 31) et de l'élément interne (1) ;
un joint (8) monté dans une ouverture côté extérieur d'ouvertures annulaires formées entre l'élément externe (2, 2', 31) et l'élément interne (1) ;
un premier chapeau (14, 29) monté par ajustement serré dans une ouverture côté intérieur de l'élément externe (2, 2', 31), le premier chapeau (14, 29) comprenant une portion d'ajustement cylindrique (14a, 29a) montée par ajustement serré dans une surface d'ajustement interne (16, 16') de l'élément externe (2, 2', 31) et une portion inférieure (14e) qui s'étend dans le sens radial vers l'intérieur à partir de la portion d'ajustement (14a, 29a) pour couvrir l'extrémité du côté intérieur de l'élément interne (1), et le premier chapeau (14, 29) adhérant intégralement sur sa circonférence externe côté intérieur de la portion d'ajustement (14a, 29a) à un élément élastique (15, 30, 33, 34) constitué de caoutchouc synthétique par adhérence vulcanisée et l'élément élastique (15, 30, 33, 34) se projetant dans le sens radial vers l'extérieur au-delà du diamètre extérieur de la portion d'ajustement (14a, 29a) ; et
la circonférence interne du côté intérieur de l'élément externe (2, 2', 31) étant formée par une surface d'ajustement interne (16, 16') dans laquelle le premier chapeau (14, 29) est monté par ajustement serré et une surface en retrait (18, 18', 32) formée du côté intérieur à partir de la surface d'ajustement interne (16, 16') par le biais d'une portion en gradin (17, 17') et ayant un diamètre supérieur à celui de la surface d'ajustement interne (16, 16') ;
**caractérisé en ce :**
**que** la surface en retrait (32) de l'élément externe (31) est réalisée sous la forme d'une surface conique qui s'étend graduellement vers l'extrémité ouverte et l'élément élastique (30) comporte une surface conique mise en contact par pressage contre la surface en retrait (32) ;
**que** l'élément élastique (15, 30, 33, 34) est mis en contact par pressage contre la surface en retrait (18, 18', 32) tout en étant déformé élastiquement ; et
**que** la surface en retrait (32) possède un diamètre supérieur à celui de la surface d'ajustement interne (16, 16') afin de ne pas provoquer une rayure résultant de l'ajustement serré sur la surface en retrait (32) à l'endroit où l'élément élastique (30) entre en contact, même si une quelconque rayure linéaire étant provoquée sur la surface d'ajustement (16, 16') de l'élément extérieur (31) par le premier chapeau (14, 29) durant l'ajustement de celui-ci, et pour éviter d'endommager l'élément élastique (30) et ainsi améliorer l'aptitude à l'étanchéité de la portion d'ajustement (14a, 29a) et la fiabilité de l'appareil roulement de roue.

2. Appareil roulement de roue selon la revendication 1, le diamètre interne (Dr) de la surface en retrait (18, 18') étant fixé supérieur à la valeur maximale de la tolérance du diamètre interne (Ds) de la surface d'ajustement interne (16, 16').

3. Appareil roulement de roue selon la revendication 1, la bague génératrice d'impulsions (11) ayant des caractéristiques magnétiques qui varient sur la circonférence et de manière équidistante étant montée par ajustement serré sur la bague interne (5), le premier chapeau (14) étant constitué d'une tôle d'acier non magnétique, et un capteur de vitesse de rotation (22) se trouvant à l'opposé de la bague génératrice d'impulsions (11) par un entrefer axial prédéterminé à travers le premier chapeau (14), le capteur de vitesse de rotation (22) venant en butée contre le premier chapeau (14) ou étant disposé proche de celui-ci.

4. Appareil roulement de roue, comprenant :
un élément externe (35, 35', 42, 48) formé intégralement sur sa circonférence externe avec une bride de montage de caisse (2b) à monter sur une caisse de véhicule et sur sa circonférence interne avec des surfaces de chemin de roulement (2a, 2a) externes à double rangée ;
un élément interne (1) comprenant un moyeu de roue (4) et au moins une bague interne (5), le moyeu de roue (4) étant formé intégralement sur l'une de ses extrémités avec une bride de montage de roue (6) et possédant une portion cylindrique (4b) qui s'étend axialement depuis la bride de montage de roue (6), la bague interne (5) étant montée par ajustement serré sur la portion cylindrique (4b) du moyeu de roue (4), l'élément interne étant formé sur sa circonférence externe avec des surfaces de chemin de roulement (4a, 5a) internes à double rangée à l'opposé des surfaces de chemin de roulement (2a, 2a) externes à double rangée ;
des éléments de roulement (3, 3) à double rangée contenus entre les surfaces de chemin de roulement (2a, 2a) externes et les surfaces de chemin de roulement (4a, 5a) internes respectives de l'élément externe (35, 35', 42, 48) et de l'élément interne (1) ;
un joint (8) monté dans une ouverture côté extérieur d'ouvertures annulaires formées entre l'élément externe (35, 35', 42, 48) et l'élément interne (1) ;
un premier chapeau (36, 41, 45, 46) monté par ajustement serré dans une ouverture côté intérieur de l'élément externe (2, 2', 31), un élément élastique (37, 43, 47) constitué de caoutchouc synthétique adhérant sur la circonférence externe du premier chapeau (36, 41, 45, 46) par adhérence vulcanisée ; et
une bague génératrice d'impulsions (11) montée par ajustement serré sur la circonférence externe de la bague interne (5) ;
l'élément élastique (37, 43, 47) étant mis en contact par pressage contre l'élément externe (35, 35', 42, 48) tout en étant déformé élastiquement ; et
l'élément élastique (37, 43, 47) et la bague génératrice d'impulsions (11) étant placés à des positions espacées axialement l'une de l'autre, **caractérisé en ce :**
**que** la portion d'ajustement (36a) du chapeau (36, 41) est montée par ajustement serré dans la circonférence interne côté intérieur de l'élément externe (35, 35', 42) de sorte que l'extrémité de la pointe de la portion d'ajustement (36a) est dirigée vers le côté extérieur, une portion réduite dans le sens radial (36c) s'étend en outre depuis l'extrémité de la pointe de la portion d'ajustement (36a) en passant par une portion inclinée (36b) et l'élément élastique (37, 43) adhère au chapeau (36, 41) de telle sorte que l'élément élastique (37, 43) recouvre la circonférence externe de la portion inclinée (36b) et la portion réduite dans le sens radial (36c) et s'étend autour de l'extrémité de la pointe de la portion réduite dans le sens radial (36c).

5. Appareil roulement de roue selon la revendication 4, la circonférence interne côté intérieur de l'élément externe (42) comprenant une surface d'ajustement interne (38) dans laquelle le premier chapeau (41, 46) est monté par ajustement serré et une surface cylindrique d'un diamètre plus petit que la surface d'ajustement interne (38) qui s'étend depuis la surface d'ajustement interne (38) par le biais d'une portion en gradin (44), l'élément élastique (43, 47) étant formé avec une projection annulaire (43a) qui se projette dans le sens radial vers l'extérieur et la portion en gradin (44) de l'élément externe (42) étant formée avec une surface conique contre laquelle la projection annulaire (43a) de l'élément élastique (43, 47) est mise en contact par pressage avec déformation élastique.

6. Appareil roulement de roue selon la revendication 5, l'élément élastique (47) étant mis en contact par pressage contre la surface d'ajustement interne (38) et la portion en gradin (44) de l'élément externe (42) de telle sorte qu'il remplit un espace annulaire formée par la surface d'ajustement interne (38) et la portion en gradin (44).

7. Appareil roulement de roue selon la revendication 5, la valeur maximale de la tolérance du diamètre interne (Ds1) de la surface d'ajustement (38) en retrait interne étant fixée supérieure au diamètre interne (Dr1) de la surface du diamètre plus petit (40).

8. Appareil roulement de roue selon les revendications 1 ou 4, le deuxième chapeau (19) étant disposé sur le côté interne du premier chapeau (14, 36), le deuxième chapeau (19) comprenant une portion d'ajustement (19a) destinée à être montée par ajustement serré dans l'extrémité de l'élément externe (2, 35), une portion de bride (19b) à mettre en contact étroit avec une extrémité côté extérieur (2d) de l'élément externe (2, 35) et une portion inférieure (19c) destinée à fermer l'ouverture côté intérieur de l'élément externe (2, 35), une ouverture (21) étant formée sur la portion inférieure (19b) à une position horizontale correspondant à la bague génératrice d'impulsions (11) et un capteur de vitesse de rotation (22) étant monté dans l'ouverture (21).

9. Appareil roulement de roue selon la revendication 8, le deuxième chapeau (19) étant revêtu d'un film de revêtement conservateur comprenant une électrodéposition cationique.
